# EUROPEAN PATENT SPECIFICATION

(11) **EP 3 140 932 B1**
(45) Date of publication and mention of the grant of the patent: **09.05.2018**
(21) Application number: 15719290.7
(22) Date of filing: 27.03.2015
(51) Int. Cl.: H04J 3/06

(54) **A METHOD FOR ROBUST PTP SYNCHRONIZATION WITH DEFAULT 1588V2 PROFILE**
VERFAHREN FÜR ROBUSTE PTP-SYNCHRONISATION MIT VOREINGESTELLTEM 1588V2-PROFIL
PROCÉDÉ DE SYNCHRONISATION PTP ROBUSTE À PROFIL 1588V2 PAR DÉFAUT

(30) Priority: 05.05.2014 US 201414269786
(43) Date of publication of application: 15.03.2017
(73) Proprietor: Telefonaktiebolaget LM Ericsson (publ), 164 83 Stockholm (SE)
(72) Inventor: ZHENG, Qun, Surrey, British Columbia V3S 8M8 (CA); GEYER, Thomas, Langley, British Columbia V1M 2G1 (CA)
(74) Representative: Ericsson
(86) International application number: PCT/IB2015/052287
(87) International publication number: WO 2015/170201

(56) References cited:
- WO-A1-2013/189536
- CN-A- 103 051 407
- TAKAHIDE MURAKAMI ET AL: "A master redundancy technique in IEEE 1588 synchronization with a link congestion estimation", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 30-35, XP031780860, ISBN: 978-1-4244-5978-0

## Description

### FIELD

Embodiments of the invention relate to the field of packet networks; and more specifically, to clock synchronization over a network.

### BACKGROUND

The Precision Time Protocol (PTP) is a protocol utilized for synchronizing clocks throughout a network. PTP was originally defined by the Institute of Electrical and Electronics Engineers (IEEE) 1588-2002 standard, entitled "Standard for a Precision Clock Synchronization Protocol for Networked Measurement and Control Systems" (hereby incorporated by reference), and released in 2002. In 2008, a revised standard, IEEE 1588-2008 entitled "IEEE Standard for a Precision Clock Synchronization Protocol for Networked Measurement and Control Systems" (hereby incorporated by reference) was released. This new version, also commonly known as PTP Version 2 (PTPv2), improves accuracy, precision, and robustness. IEEE 1588-2008 was initially utilized primarily by instrumentation and control applications. The telecom industry, however, has since adopted IEEE 1588-2008 as a solution for providing time synchronization for packet network applications such as mobile backhaul. These packet network applications, however, require microsecond or better time distribution over the network and high quality fault tolerance.

IEEE 1588-2008 defines a best master clock algorithm (BMCA), executed at each PTP clock in the PTP domain, for configuring the PTP clocks to be a grandmaster, boundary clock, or slave clock. By utilizing their BMCA to determine their roles in the PTP domain, the PTP clocks converge to form a synchronization tree. While the synchronization tree is being formed, all clocks start locking (i.e., synchronizing) to their masters. Typically, it requires several minutes for each PTP clock to synchronize to its master. After the synchronization tree is formed, if one or more of the PTP clocks or the network experience a fault, all the downstream clocks will rearrange/re-converge to form a new synchronization tree. During this re-convergence period, timing transients will occur as new master and slave ports are selected by the BMCAs. These timing transients result in a period of time where the clock quality advertised to the ultimate slave clocks is inaccurate. These timing transients persist until all PTP clocks in the synchronization tree actually acquire synchronization to their new masters. In other words, for several minutes, or perhaps an hour or longer in larger networks, the timing accuracy is not as good as advertised. This results in the application being provided with inadequate timing accuracy. The timing transients that occur during the re-convergence period are not acceptable by packet network applications in the telecom domain.

Known techniques, such as holdover, exist to work around certain failure/recovery scenarios. Such techniques, however, are inadequate for prolonged outages. Further, because the BMCA will advertise a clock quality that is not true during failure-induced rearrangements, holdover techniques will not work. An example of background art can be found in CN 103 051 407 A.

### SUMMARY

Exemplary methods for reducing sync time in a first network device for supporting Precision Time Protocol (PTP) in a network are herein described. In one embodiment, the methods include receiving, by a first PTP port associated with the first network device configured as a PTP slave port, PTP timing messages from a second PTP port associated with a second network device configured as a PTP master port, wherein the PTP timing messages include timing information of a PTP master clock maintained by the second network device. In one embodiment, the methods further include maintaining a PTP master clock based on the timing information included in the PTP timing messages received from the second network device via the first PTP port. In one embodiment, the methods further include receiving, by a third PTP port associated with the first network device configured as a PTP passive port, PTP timing messages from a fourth PTP port associated with a third network device configured as a PTP master port, wherein the PTP timing messages include timing information of a PTP master clock maintained by the third network device.

According to one embodiment, the methods include determining the third PTP port is a protective passive port based on a stepsRemoved value associated with the third network device, wherein a stepsRemoved value indicates a number of boundary clock levels a respective network device is away from a PTP grandmaster clock of the network. In one embodiment, in response to determining the third PTP port is a protective passive port, maintaining a PTP auxiliary clock based on the timing information included in the PTP timing messages received from the third network device via the third PTP port, wherein in an event that the first network device fails to receive PTP timing messages from the second network device via the first PTP port, the PTP auxiliary clock is utilized by the first network device to synchronize its PTP master clock to the PTP master clock maintained by the third network device.

In one aspect of the invention, determining the third PTP port is a protective passive port comprises determining the third network device has a stepsRemoved value that is one less than a stepsRemoved value of the first network device. In one embodiment, determining the third PTP port is a protective passive port further comprises receiving, by a fifth PTP port associated with the first network device configured as a PTP passive port, PTP timing messages from an sixth PTP port associated with a fourth network device configured as a PTP master port, wherein the PTP timing messages include timing information of a PTP master clock maintained by the fourth network device, and in response to determining the fourth network device has a stepsRemoved value that is equal to a stepsRemoved value of the first network device, determining the fifth PTP port is a non-protective passive port.

In one aspect of the invention, determining the third PTP port is a protective passive port comprises receiving, by a fifth PTP port associated with the first network device configured as a PTP passive port, PTP timing messages from an sixth PTP port associated with a fourth network device configured as a PTP master port, wherein the PTP timing messages include timing information of a PTP master clock maintained by the fourth network device, determining the third network device has a stepsRemoved value that is equal to a stepsRemoved value of the fourth network device, and determining the fourth PTP port associated with the third network device has a port identity (ID) that is less than a port ID of the sixth PTP port associated with the fourth network device.

According to one embodiment, the methods further include in response to determining a failure to receive PTP timing messages from the second network device via the first PTP port, configuring the first PTP port to be a PTP master port, configuring the third PTP port to be a PTP slave port, and utilizing information of the PTP auxiliary clock to synchronize the PTP master clock maintained by the first network device to the PTP master clock maintained by the third network device. In one embodiment, the methods further include applying a phase slope limit to the PTP master clock maintained by the first network device after the third PTP port has been configured to be a PTP slave port.

In one embodiment, the second network device and the third network device are a same network device configured to serve as a PTP grandmaster clock of the network. In an alternate embodiment, the second network device and the third network device are different network devices, wherein the second network device and the third network device are configured to serve as a PTP boundary clock of the network. In one embodiment, the second network device and the third network device are synchronized to the same grandmaster.

### BRIEF DESCRIPTION OF THE DRAWINGS

Embodiments of the invention are illustrated by way of example and not limitation in the figures of the accompanying drawings in which like references indicate similar elements.
Figure 1A illustrates a conventional PTP network.
Figure 1B illustrates a conventional PTP network.
Figure 1C illustrates a conventional PTP network.
Figure 2 is a block diagram illustrating a network device for supporting PTP according to one embodiment.
Figure 3A is a block diagram illustrating a PTP network according to one embodiment.
Figure 3B is a block diagram illustrating a PTP network according to one embodiment.
Figure 3C is a block diagram illustrating a PTP network according to one embodiment.
Figure 3D is a block diagram illustrating a PTP network according to one embodiment.
Figure 4 is a flow diagram illustrating a method for maintaining an auxiliary clock according to one embodiment.
Figure 5 is a flow diagram illustrating a method for reducing sync time in a PTP network according to one embodiment.

### DESCRIPTION OF EMBODIMENTS

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

An electronic device or a computing device (e.g., an end station, a network device) stores and transmits (internally and/or with other electronic devices over a network) code (composed of software instructions) and data using machine-readable media, such as non-transitory machine-readable media (e.g., machine-readable storage media such as magnetic disks; optical disks; read only memory; flash memory devices; phase change memory) and transitory machine-readable transmission media (e.g., electrical, optical, acoustical or other form of propagated signals - such as carrier waves, infrared signals). In addition, such electronic devices include hardware, such as a set of one or more processors coupled to one or more other components - e.g., one or more non-transitory machine-readable storage media (to store code and/or data) and network connections (to transmit code and/or data using propagating signals), as well as user input/output devices (e.g., a keyboard, a touchscreen, and/or a display) in some cases. The coupling of the set of processors and other components is typically through one or more interconnects within the electronic devices (e.g., busses and possibly bridges). Thus, a non-transitory machine-readable medium of a given electronic device typically stores instructions for execution on one or more processors of that electronic device. One or more parts of an embodiment of the invention may be implemented using different combinations of software, firmware, and/or hardware.

As used herein, a network device (e.g., a router, switch, bridge) is a piece of networking equipment, including hardware and software, which communicatively interconnects other equipment on the network (e.g., other network devices, end stations). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video). Subscriber end stations (e.g., servers, workstations, laptops, netbooks, palm tops, mobile phones, smartphones, multimedia phones, Voice Over Internet Protocol (VOIP) phones, user equipment, terminals, portable media players, GPS units, gaming systems, set-top boxes) access content/services provided over the Internet and/or content/services provided on auxiliary private networks (VPNs) overlaid on (e.g., tunneled through) the Internet. The content and/or services are typically provided by one or more end stations (e.g., server end stations) belonging to a service or content provider or end stations participating in a peer-to-peer (P2P) service, and may include, for example, public webpages (e.g., free content, store fronts, search services), private webpages (e.g., username/password accessed webpages providing email services), and/or corporate networks over VPNs. Typically, subscriber end stations are coupled (e.g., through customer premise equipment coupled to an access network (wired or wirelessly)) to edge network devices, which are coupled (e.g., through one or more core network devices) to other edge network devices, which are coupled to other end stations (e.g., server end stations).

A network interface may be physical or auxiliary; and an interface address is an IP address assigned to a network interface, be it a physical network interface or auxiliary network interface. A physical network interface is hardware in a network device through which a network connection is made (e.g., wirelessly through a wireless network interface controller (WNIC) or through plugging in a cable to a port connected to a network interface controller (NIC)). Typically, a network device has multiple physical network interfaces. A auxiliary network interface may be associated with a physical network interface, with another auxiliary interface, or stand on its own (e.g., a loopback interface, a point to point protocol interface). A network interface (physical or auxiliary) may be numbered (a network interface with an IP address) or unnumbered (an network interface without an IP address). A loopback interface (and its loopback address) is a specific type of auxiliary network interface (and IP address) of a node (physical or auxiliary) often used for management purposes; where such an IP address is referred to as the nodal loopback address. The IP address(es) assigned to the network interface(s) of a network device, are referred to as IP addresses of that network device; at a more granular level, the IP address(es) assigned to network interface(s) assigned to a node implemented on a network device, can be referred to as IP addresses of that node.

IEEE 1588-2008 defines three types of PTP clocks: Ordinary Clock (OC), Boundary Clock (BC), and Transparent Clock (TC). An OC has one instance of the PTP protocol running (i.e., one PTP port). An OC can either provide timing to the PTP time domain (i.e., be the grandmaster, described in further details below) or can regenerate the timing from a grandmaster (i.e., be the slave, described in further details below). Alternatively, an OC can be configured to be Grandmaster-Only Ordinary Clock (GMOC), which only serves as the grandmaster, or a Slave-Only Ordinary Clock (SOOC), which only serves as a slave. A BC has more than one instance of the PTP protocol running (i.e., multiple PTP ports). A BC receives timing messages from an upstream master, synchronizes its local time of day to these timing messages, and distributes that local time of day to downstream slaves. The upstream masters can be BCs, OCs, GMOCs, or any combination thereof. The downstream slaves can be BCs, OCs, SOOCs, or any combination thereof. Thus, a BC provides intermediate timing regeneration between grandmasters and slave OCs. A BC needs to provide fault tolerance required by the telecom network devices. A TC is also situated between grandmasters and slave OCs/SOOCs, but does not regenerate timing signals.

Each PTP device periodically sends Announce messages via the master PTP ports to other PTP devices in the same PTP domain. Here, a PTP device refers to a network device that supports PTP. The Announce messages include clock information and identity of the sending PTP device's PTP clock, stepsRemoved value of the sending PTP device, and information concerning the grandmaster. A best master clock algorithm (BMCA) executed at each PTP clock utilizes information included in the received Announce messages to determine the role of the local master clock in the PTP domain. IEEE 1588-2008 defines three roles: grandmaster (GM), boundary clock (BC), and slave.

A GM provides the ultimate time source to all other PTP clocks in a PTP time domain. The GM derives its timing from a non-PTP source, and distributes this time into the PTP domain using PTP messages (e.g., PTP Sync messages) on the packet network. All PTP clocks (other than the GM) synchronize to one GM clock in a PTP time domain. As a result of the BMCA running on every clock, an OC, GMOC, or BC can take on the role as the GM.

A slave ordinary clock utilizes time codes included in PTP messages received from a grandmaster or a boundary clock to generate a local time that is an estimate of its domain's grandmaster time. This regenerated time is then provided to one or more non-PTP application that is running on the slave ordinary clock or attached to the slave ordinary clock via a non-PTP interface. Note that either an OC or SOOC can be a slave ordinary clock. A boundary clock (BC) utilizes time codes included in PTP messages received from an upstream master clock to regenerate the time codes and send them to downstream slaves. PTP clocks only synchronize to masters of the same PTP domain, which is identified by a PTP domain number.

IEEE 1588-2008 specifies that a PTP port can be configured to be in one of three states: master, slave, or passive. It shall be understood that PTP ports can be in one or more other states, including, for example, uncalibrated, listening, disabled, faulty, initialing state, etc. At any given moment, there is a maximum of only one PTP port in a PTP clock that can be configured to be in the slave state. Throughout the description, a PTP port configured to be in the master, slave, or passive state will simply be referred to as a PTP master port, PTP slave port, or PTP passive port, respectively. A PTP clock synchronizes its local master clock to the time codes received on a PTP slave port from a peer PTP master port. A PTP passive port is utilized for pruning the PTP network to avoid timing loops. Here, a "timing loop" refers to a phenomenon where a PTP clock is attempting to synchronize to itself by using timing codes that it originated.

PTP port configuration will now be described. When a PTP port receives an Announce message that indicates the sender has a worse clock as compared to the local master clock and all other master clocks seen by the local clock in the network according to the timing information in the Announce messages received on any local PTP port, the receiving port will be configured to be in the master state, and the peer PTP port will be configured to be in the slave state. When a PTP port receives an Announce message that indicates the sender has a clock which has similar quality as compared to the local master clock and all other master clocks seen by the local clock in the network according to the timing information in the Announce messages received on any local PTP port (e.g., they are syncing to the same grandmaster), then the receiving port can be configured to be either in the master or passive state, depending on stepsRemoved values and portIdentity of the receiving and transmitting PTP port. Here, "stepsRemoved" refers to the number of BC hops away the respective PTP clock is from the GM, and "portIdentity" is a unique value/identifier that is assigned to each PTP port in the PTP domain. A portIdentity uniquely identifies a PTP port, and comprises the clockIdentity and a portNumber. A clockIdentity uniquely identifies the PTP clock, and the portNumber is unique within that PTP clock. Note that PTP ports on a clock A will have lower portIdentities than PTP ports on a clock B if clock A has a clockIdentity that is lower than clock B.

The configuration of a PTP port (to be a PTP master or passive port) when the transmitting and receiving PTP clocks have similar quality will now be discussed. The receiving port will be configured to be a PTP master port (and the peer PTP port will be configured as a PTP passive port) if the receiving PTP clock's stepsRemoved value is lower than the sender. The receiving port will also be configured to be a PTP master port (and the peer PTP port will be configured as a PTP passive port) if the receiving PTP clock's stepsRemoved value is the same as the sender, but the receiving PTP port's portIdentity is lower than the sender's portIdentity. If, however, the receiving PTP clock's stepsRemoved value is the same as the sender, but the receiving PTP port's portIdentity is larger than the sender's portIdentity, then the receiving port will be configured to be a PTP passive port (and the peer PTP port will be configured as a PTP master port). Finally, if the receiving PTP clock has a stepsRemoved value that is larger than the stepsRemoved value of the sender (i.e., the receiving clock is "farther" from the GM as compared to the transmitting clock), then the receiving port will be configured to be a PTP passive port (and the peer PTP port will be configured as a PTP master port).

When all the PTP clocks in the network have settled/converged, the resulting links between the master, slave, and passive ports of the PTP clocks form a synchronization tree. Any change in a clock's quality, a clock failure, or a network failure will cause all downstream clocks to reacquire synchronization to a new master (i.e., form a new synchronization tree). While the PTP clocks re-converge to form the new synchronization tree, the accuracy of the PTP clocks involved in the re-convergence process will be impaired, which affects the accuracy of the time provided to the applications utilizing the clocks. Limitations of conventional PTP networks will now be described by way of illustration through the figures below, in which like references indicate similar elements.

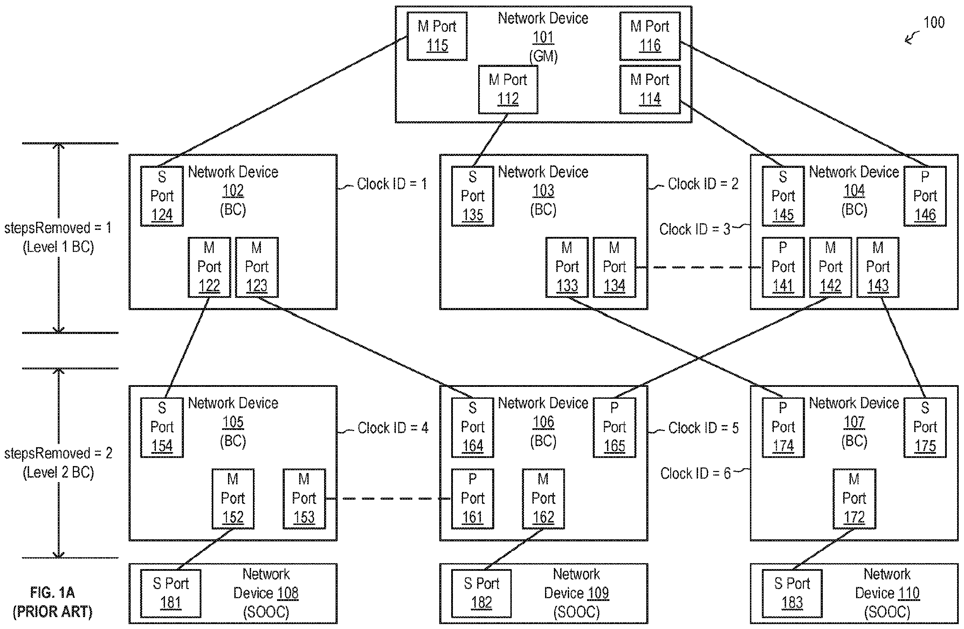

Figures 1A - 1C are block diagrams illustrating conventional PTP network 100. Throughout the figures, various PTP master ports, PTP slave ports, and PTP passive ports will simply be referred to as M ports, S ports, and P ports, respectively. Referring first to Figure 1A, which is a block diagram illustrating conventional PTP network 100 that includes network devices 101 - 110 communicatively coupled to each other as shown. In this illustrated configuration, network device 101 has been configured to be the GM (herein referred to as GM 101), network devices 102 - 107 have been configured to be BCs (herein referred to as BCs 102 - 107, respectively), and network devices 108 - 110 have been configured to be SOOCs (herein referred to as SOOCs 108 - 110, respectively). BCs 102 - 107 have been assigned clockIdentities 1 - 6, respectively. Thus, the portIdentities of BC 102 are the lowest and the portIdentities of BC 107 are the highest. In this example, network 100 includes 2 BC levels. BCs 102 - 104 belong to the first BC level (i.e., they are 1 BC level/hop away from GM 101), and thus, each has a stepsRemoved value of 1. BCs 105 - 107 belong to the second BC level (i.e., they are 2 BC levels/hops away from GM 101), and thus, each has a stepsRemoved value of 2.

GM 101 includes M port 115 communicatively coupled to Sport 124 of BC 102, M port 112 communicatively coupled to S port 135 of BC 103, M ports 114 and 116 communicatively coupled to S port 145 and P port 146, respectively, of BC 104. BC 102 includes Sport 124 as described above. BC 102 further includes M port 122 communicatively coupled to Sport 154 of BC 105, and M port 123 communicatively coupled to Sport 164 of BC 106. BC 103 includes Sport 135 as described above. BC 103 further includes M port 133 communicatively coupled to P port 174 of BC 107, and M port 134 communicatively coupled to P port 141 of BC 104.

BC 104 includes Sport 145, P port 146, and P port 141 as described above. BC 104 further includes M port 142 communicatively coupled to P port 165 of BC 106, and M port 143 communicatively coupled to Sport 175 of BC 107. BC 105 includes S port 154 as described above. BC 105 further includes M port 152 communicatively coupled to S port 181 of SOOC 108, and M port 153 communicatively coupled to P port 161 of BC 106. BC 106 includes S port 164, P port 165, and P port 161 as described above. BC 106 further includes M port 162 communicatively coupled to S port 182 of SOOC 109. BC 107 includes P port 174 and S port 175 as described above. BC 107 further includes M port 172 communicatively coupled to S port 183 of SOOC 110. SOOCs 108 - 110 include S ports 181 - 183, respectively, as described above.

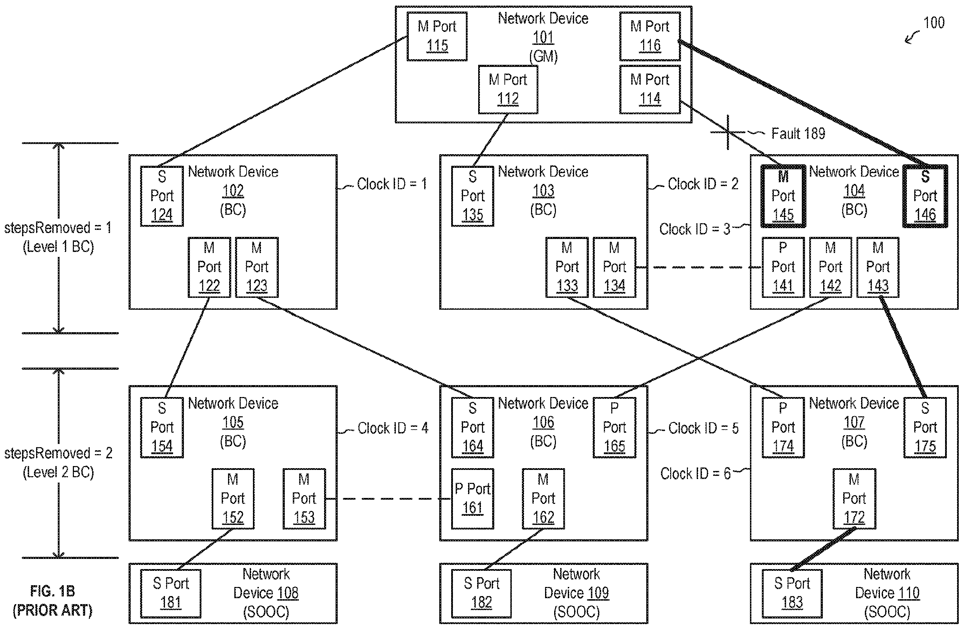

Referring now to Figure 1B, which is a block diagram illustrating conventional PTP network 100. Network 100 illustrated in Figure 1B is similar to network 100 shown in Figure 1A, except that fault 189 has occurred. In Figure 1B, the PTP ports and links in bold are those which are affected by fault 189. Due to fault 189, BC 104 is no longer able to receive PTP messages from GM 101 via Sport 145, which prevents BC 104 from syncing its local master clock to GM 101 via S port 145. As a result, BC 104 must select a new PTP port to be a slave port. In this example, BC 104 reconfigures its PTP port 146 from passive to slave state, and PTP port 145 from slave to master state (because only one PTP port can be a slave at a PTP clock). Thus, BC 104 has selected PTP port 146 to be its new slave port.

The synchronization tree shown in Figure 1B remains unchanged after fault 189 has occurred. A change in slave port, however, has occurred. When a conventional PTP clock selects a new slave port, it requires time to sync its local master clock to the new master clock through the new slave port. While this syncing process is occurring, all downstream PTP devices that rely on the PTP clock will also be affected. In this example, BC 107 and SOOC 110 will be affected. Embodiments of the present invention overcome these limitations by reducing the impact, e.g., by reducing the sync time, described in further details below.

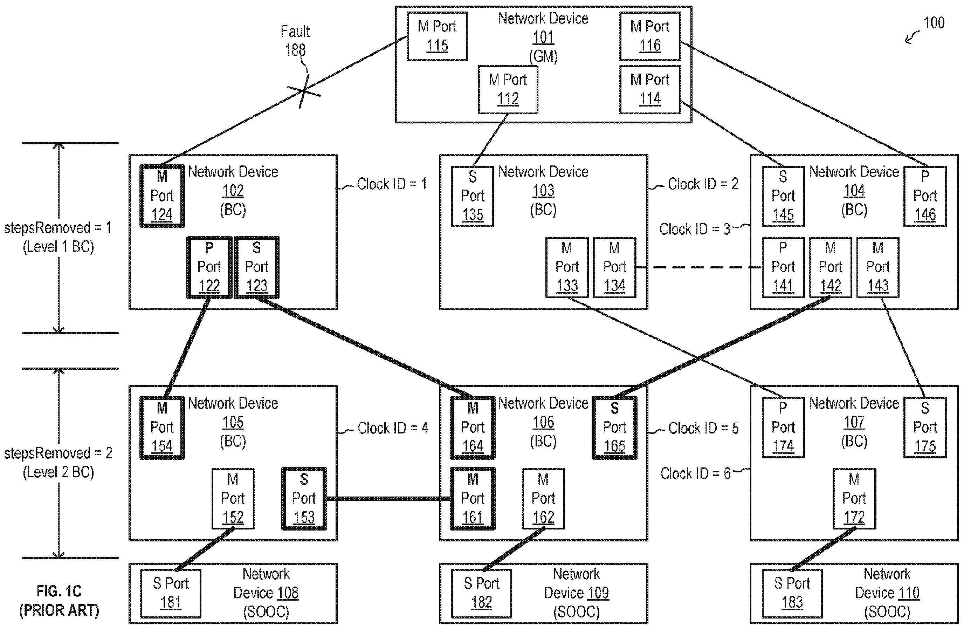

Referring now to Figure 1C, which is a block diagram illustrating conventional PTP network 100. Network 100 illustrated in Figure 1C is similar to network 100 shown in Figure 1A, except that fault 188 has occurred. In Figure 1C, the PTP ports and links in bold are those which are affected by fault 188. Due to fault 188, BC 102 is no longer able to receive PTP messages from GM 101 via Sport 124, which prevents BC 102 from syncing its local master clock to GM 101 via S port 124. As a result, BC 102 must select a new PTP port to be a slave port. In this example, BC 102 reconfigures its PTP port 123 from master to slave state, and PTP port 124 from slave to master state (because only one PTP port can be a slave at a PTP clock). Thus, BC 102 has selected PTP port 123 to be its new slave port. In response to BC 102 configuring PTP port 123 to be a new slave port, BC 106 reconfigures its PTP port 164 from slave state to master state. Further, BC 106 has selected its PTP port 165 to be the new slave port. In order to avoid a timing loop, BC 106 has also reconfigured its PTP port 161 to be a master port. The reconfiguration of PTP port 161 to be a master port, in turn, causes BC 105 to reconfigure its PTP port 153 to be a slave port. Given that only one PTP port can be a slave port at a PTP clock, BC 105 reconfigures its PTP port 154 from slave to master port. The reconfiguration of PTP port 154 to be a master port, in turn, causes BC 102 to reconfigure its PTP port 122 from master state to passive state.

The new synchronization tree shown in Figure 1C has resulted in BC 102 changing its stepsRemoved value from 1 to 3. In other words, BC 102 is now 3 BC levels away from GM 101. When a synchronization tree is rearranged, all downstream PTP devices will be affected. The time it takes for a synchronization tree to rearrange can be quite long, depending on the network size. Embodiments of the present invention overcome these limitations by reducing the impact, e.g., by reducing the sync time, described in further details below.

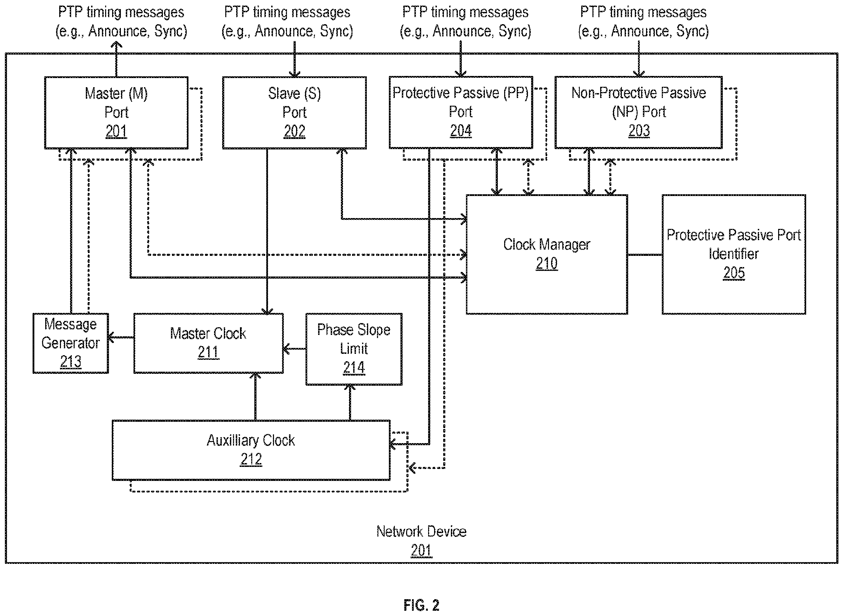

Figure 2 is a block diagram illustrating network device 201 for supporting PTP according to one embodiment. Network device 201 includes one or more PTP ports, for example PTP ports 201 - 204. It shall be understood that more or less PTP ports can be included as part of network device 201. PTP ports 201 - 204 are responsible for forwarding received information concerning master clock quality and stepsRemoved values of other PTP master clocks in the network to clock manager 210. Such information is included, for example, in received PTP Announce and/or Sync messages.

Clock manager 210 determines the state (e.g., master, slave, passive) of PTP ports 201 - 204 based on the received master clock quality and stepsRemoved values. Clock manager 210 may determine the states of PTP ports 201 - 204 using mechanisms similar to those described above. Other mechanisms for determining the state of each PTP port can be used without departing from the broader scope of the present invention. In the illustrated example, clock manager 210 has configured PTP port 201 to be a PTP master port (herein referred to as an M port), PTP port 202 to be a PTP slave port (herein referred to as an S port), and PTP ports 203 - 204 as passive ports (herein referred to as P ports). It shall be understood that clock manager 210 can configure the PTP ports such that there are multiple instances of M ports 201, and/or P ports 203 - 204.
Clock manager 210 utilizes time codes received via S port 202 to maintain (i.e., sync) master clock 211 to the master clock of the PTP device which is communicatively coupled to S port 202. Throughout the description, the remote PTP clock which is communicatively coupled to the S port shall be referred to as the "main remote master clock". The use of time codes in PTP timing messages (e.g., PTP Sync messages) to sync a local master clock to a main remote master clock is well known in the art. For the sake of brevity, it will not be discussed here. Network device 201 further includes message generator 213 for generating and sending PTP timing messages (e.g., Announce, Sync, etc.) via M port 201. PTP timing messages are generated based on at least information of master clock 211 and the stepsRemoved
value of network device 201. Generation and sending of PTP timing messages, such as, for example, Announce and Sync messages, are well known in the art, and will not be described here.

A conventional PTP device may include a passive port. PTP time codes received via a conventional passive port, however, are not processed. As a result, a conventional PTP device is not able to leverage off time codes received via a passive port to reduce the time it takes to sync the local master clock to a new master clock when the passive port is reconfigured to be a slave port. For example, in Figure 1B, when BC 104 switches from syncing its local master clock via PTP port 145 to PTP port 146, BC 104 is not able to reduce its sync time by leveraging off time codes received via PTP port 146 while PTP port 146 was in the passive state. Embodiments of the present invention overcome these limitations by processing time codes received from at least one PTP passive port.

In one embodiment, network device 201 includes protective passive (PP) port identifier 205 for identifying one or more passive ports as "protective passive" ports (herein referred to as PP ports) and one or more other passive ports (if any) as "non-protective passive" ports (herein referred to as NP ports). By identifying passive ports as "protective passive" ports, network device 201 is able to maintain one or more local auxiliary clocks using timing information received via the PP ports. The one or more auxiliary clocks can then be utilized by network device 201 to reduce the amount of time required to sync to a new master clock, described in further details below.

In one embodiment, PP port identifier 205 identifies one or more PP ports by determining a plurality of local PTP ports that have been configured as passive ports. In one embodiment, PP port identifier 205 selects, from the identified plurality of passive ports, a first group of passive ports that are communicatively coupled to PTP devices with a stepsRemoved value that is 1 less than the stepsRemoved value of network device 201. In one embodiment, PP port identifier 205 configures each of the selected passive ports as a PP port. In an alternate embodiment, PP port identifier 205 configures a predetermined number of the selected first group of passive ports that are communicatively coupled to remote PTP ports with the lowest portIdentities (among all PTP devices communicatively coupled to the selected first group of passive ports) as PP ports. In one embodiment, the predetermined number of passive ports to be configured as PP ports represents percentage. For example, if there are 10 passive ports in the selected first group of passive ports, PP port identifier 205 may be configured to identify 30% (i.e., 3 out of 10) passive ports associated with remote PTP ports with the lowest portIdentities (among all PTP ports associated with the first group of passive ports) as PP ports. Alternatively, the predetermined number of passive ports to be configured as PP ports represents a raw number. For example, if there are 10 passive ports in the selected first group of passive ports, PP port identifier 205 may be configured to identify a predetermined number of 2 passive ports associated with remote PTP ports with the lowest portIdentities (among all PTP ports associated with the first group of passive ports) as PP ports.

In one embodiment, if PP port identifier 205 determines that none of the passive ports are communicatively coupled to a PTP device that has a stepsRemoved value that is 1 less than the stepsRemoved value of network device 201, then PP port identifier 205 identifies a predetermined number (either as a percentage or raw number, as described above) of passive ports that are communicatively coupled to the PTP ports with the lowest portIdentity as the PP ports. Figure 2 illustrates by way of example, and not limitation, passive port 203 has been identified as a NP port, and passive port 204 has been identified as a PP port. It shall be understood that PP port identifier 205 can configure the PTP passive ports such that there are multiple instances of NP ports and/or PP ports. In other words, there can be multiple NP ports and/or PP ports at network device 201.

In one embodiment, after one or more PP ports have been identified, contrary to a conventional PTP device, time codes received (e.g., as part of PTP Sync messages) via the identified PP ports are processed to sync one or more local auxiliary clocks to master clocks maintained by remote PTP devices that are communicatively coupled to the identified PP ports. Throughout the description, the master clock which is communicatively coupled to a PP port of local PTP device is referred to as the "monitored remote master clock". For example, the master clock which is communicatively coupled to PP port 204 shall be referred to as a monitored remote master clock of network device 201.

In one embodiment, clock manager 210 maintains an auxiliary clock for each identified PP port. Clock manager 210 can approximate the clock frequency of each monitored remote master clock based on the time codes received via a respective PP port. The approximated clock frequency of each monitored remote master clock can then be used to sync a respective auxiliary clock to the respective monitored remote master clock. In the illustrated example, clock manager 210 utilizes time codes received via PP port 204 to maintain auxiliary clock 212. Clock manager 210 approximates the clock frequency of the monitored remote master clock based on the time codes received via PP port 204. The approximated clock frequency of the monitored remote master clock can then be used to sync auxiliary clock 212 to the monitored remote master clock.

In an event that network device 201 fails to receive PTP timing messages via its S port 202 (e.g., due to a failure of S port 202, a failure of the peer master port that is communicatively coupled to Sport 202, or a failure of a network link), network device 201 can configure its S port 202 to be a master port. Further, clock manager 210 identifies one of the local PP ports to be a new slave port. Clock manager 210 then causes master clock 211 to start syncing to the auxiliary clock corresponding to the PP port that has been re-configured to be the new slave port. For example, in response to determining a failure to receive PTP timing messages via S port 202, clock manager 210 reconfigures PP port 204 to be a new slave port, and starts syncing master clock 211 to auxiliary clock 212.

In one embodiment, when clock manager 210 starts syncing master clock 211 to an auxiliary clock, clock manager 210 applies phase slope limit 214 (also commonly known as a "phase rate change limit") in order to prevent the clock phase of master clock 211 from changing more than the value indicated by phase slope limit 214. Continuing on with the above example, clock manager 210 applies phase slope limit 214 when clock manager 210 starts syncing master clock 211 to auxiliary clock 212. By limiting the phase change, clock manager 210 prevents timing disturbance to downstream PTP slave devices. In one embodiment, phase slope limit 214 can be configured by a user (e.g., an operator) via an application programming interface (API).

In one embodiment, once the new slave port starts receiving PTP timing messages from the new main remote master clock (former monitored remote master clock), clock manager 210 starts syncing master clock 211 to the new main remote master clock. By syncing to an auxiliary clock (e.g., auxiliary clock 212), clock manager 210 is able to reduce the amount of time required to sync master clock 211 to the new main remote master clock. Thus, contrary to a conventional PTP device, network device 201 processes time codes received via at least one passive port in order to maintain at least one auxiliary clock, which is utilized to reduce the amount of time required to sync master clock 211 to a new main remote master clock.

When a conventional PTP device selects a new slave port, there is a possibility that the new slave port will result in a new synchronization tree. For example, as illustrated in Figure 1C, when fault 188 occurs and BC 302 selects PTP port 123 as the new slave port, there is a re-convergence of the synchronization tree, resulting in BC 102 changing from being 1 BC level away from GM 101 to being 3 BC levels away from GM 101. The re-convergence requires a long duration of time for the new synchronization tree to be pruned. Embodiments of the present invention overcome these limitations by selecting one or more passive ports that are communicatively coupled to remote PTP devices that have a stepsRemoved value that is one less than the stepsRemoved value of the local network device. In this way, when the local network device switches to syncing to the PP port, the hierarchy of the synchronization tree remains unaffected, thereby reducing the amount of time required for all downstream slave clocks to re-sync.

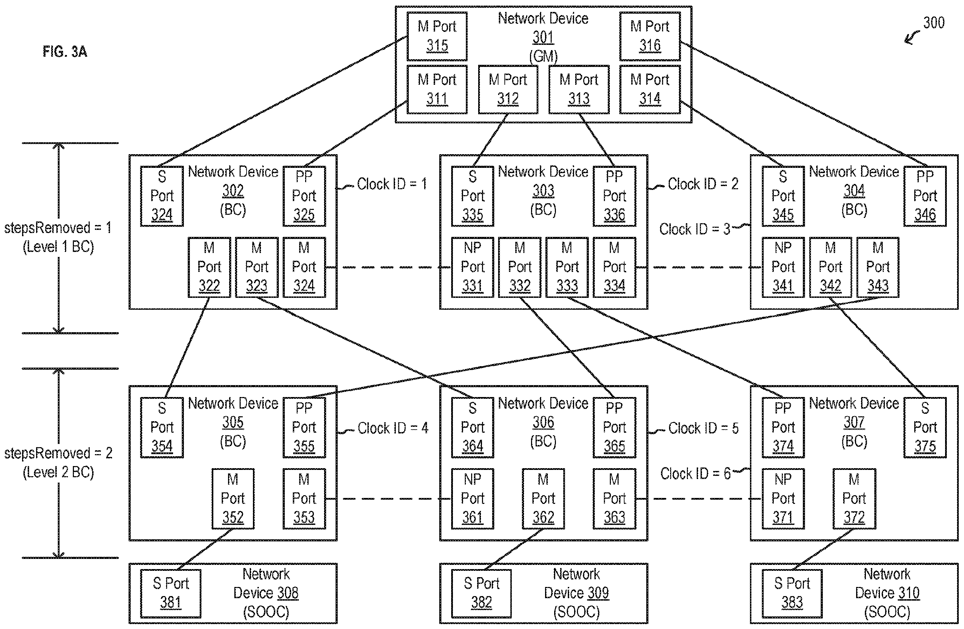

Figures 3A - 3D are block diagrams illustrating PTP network 300 according to one embodiment. Throughout the figures, various PTP master ports, PTP slave ports, non-protective passive ports, and protective passive ports will simply be referred to as M ports, S ports, NP ports, and PP ports, respectively. Referring first to Figure 3A, which is a block diagram illustrating network 100 that includes, but not limited to, network devices 301 - 310 communicatively coupled to each other as shown. One or more of network devices 301 - 310 can be implemented as part of network device 201. In this illustrated configuration, network device 301 has been configured to be the GM (herein referred to as GM 301), network devices 302 - 307 have been configured to be BCs (herein referred to as BCs 302 - 307, respectively), and network devices 308 - 310 have been configured to be SOOCs (herein referred to as SOOCs 308 - 310, respectively). BCs 302 - 307 have been assigned clockIdentities 1 - 6, respectively. Thus, the portIdentities of BC 302 are the lowest and the portIdentities of BC 307 are the highest. In this example, network 300 includes 2 BC levels. BCs 302 - 304 belong to the first BC level (i.e., they are 1 BC level/hop away from GM 301), and thus, each has a stepsRemoved value of 1. BCs 305 - 307 belong to the second BC level (i.e., they are 2 BC levels/hops away from GM 301), and thus, each has a stepsRemoved value of 2.

GM 301 includes M ports 315 and 311 communicatively coupled to S port 324 and PP port 325, respectively, of BC 302, M ports 312 and 313 communicatively coupled to S port 335 and PP port 336, respectively, of BC 303, and M ports 314 and 316 communicatively coupled to S port 345 and PP port 346, respectively, of BC 304. BC 302 includes S port 324 and PP port 325 as described above. BC 302 further includes M port 322 communicatively coupled to S port 354 of BC 305, M port 323 communicatively coupled to S port 364 of BC 306, and M port 324 communicatively coupled to NP port 331 of BC 303.

BC 303 includes S port 335, PP port 336, and NP port 331 as described above. BC 303 further includes M port 332 communicatively coupled to PP port 365 of BC 306, M port 333 communicatively coupled to PP port 374 of BC 307, and M port 334 communicatively coupled to NP port 341 of BC 304. BC 304 includes S port 345, PP port 346, and NP port 341 as described above. BC 304 further includes M port 342 communicatively coupled to S port 375 of BC 307, and M port 343 communicatively coupled to PP port 355 of BC 305.

BC 305 includes S port 354 and PP port 355 as described above. BC 305 further includes M port 352 communicatively coupled to S port 381 of SOOC 308, and M port 353 communicatively coupled to NP port 361 of BC 306. BC 306 includes S port 364, PP port 365, and NP port 361 as described above. BC 306 further includes M port 362 communicatively coupled to S port 382 of SOOC 309, and M port 363 communicatively coupled to NP port 371 of BC 307. BC 307 includes PP port 374, S port 375, and NP port 371 as described above. BC 307 further includes M port 372 communicatively coupled to S port 383 of SOOC 310. SOOCs 308 - 310 include S ports 381 - 383, respectively, as described above.

The configuration of network 300 is shown in Figure 3A for illustrative purposes and not intended to be limitations of the present invention. Embodiments of the present invention apply equally to other network configurations having more or less network devices, arranged in more or less BC levels, and having more or less PTP ports configured to be in different states.

As described above, S port 345 of BC 304 is communicatively coupled to M port 314 of GM 301. Thus, from the perspective of BC 304, GM 301 is the main remote master clock. BC 304 includes two PTP passive ports (i.e., PTP ports 341 and 346). BC 304 has identified (e.g., by utilizing a PP port identifier similar to PP port identifier 205) PTP passive port 346 as a PP port, and PTP passive port 341 as a NP passive port because PTP passive port 346 is communicatively coupled to a PTP device which has a stepsRemoved value of one less than the stepsRemoved value of BC 304. Here, GM 301 has a stepsRemoved value of 0 and BC 304 has a stepsRemoved value of 1. Thus, from the perspective of BC 304, GM 301 is also the monitored remote master clock. As such, the clock manager (similar to clock manager 210) of BC 304 utilizes time codes received in PTP timing messages (e.g., Sync messages) from GM 301 via PP port 346 to sync an auxiliary clock (similar to auxiliary clock 212) to the monitored remote master clock.

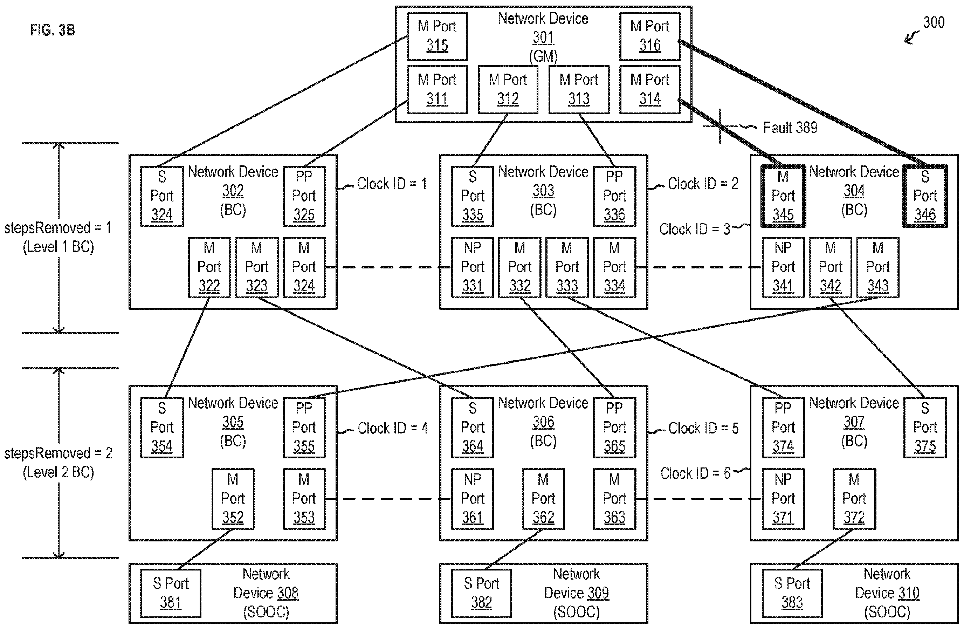

Referring now to Figure 3B, which is a block diagram illustrating network 300 according to one embodiment. Network 300 illustrated in Figure 3B is similar to network 300 shown in Figure 3A, except that fault 389 has occurred. In Figure 3B, the PTP ports and links in bold are those which are affected by fault 389. Due to fault 389, BC 304 is no longer able to receive PTP messages from its main remote master clock (i.e., GM 301) via S port 345. The failure to receive time codes prevents BC 304 from syncing its local master clock (similar to master clock 211) to GM 301 via S port 345. As a result, BC 304 must select a new PTP port to be a slave port.

When a conventional PTP device switches to a new slave port (as illustrated in Figure 1B), the conventional PTP device requires a long time to sync the local master clock to the new main remote master, and as a result all downstream PTP devices are affected. Embodiments of BC 304 overcome these limitations by processing time codes received via PTP port 346 while it was in the PP state to sync an auxiliary clock (similar to auxiliary clock 212) to the monitored remote master clock (i.e., the master clock maintained by GM 301). In one embodiment, in response to determining a failure to receive time codes from the main remote master clock via S port 345 (e.g., due to fault 389), BC 304 reconfigures PTP port 345 from slave state to master state. BC 304 starts syncing its local master clock (similar to master clock 211) to the auxiliary clock (similar to auxiliary clock 212) corresponding to PP port 346. Further, BC 304 reconfigures PTP port 346 from PP state to slave state. Thus, BC 304 has selected PTP port 346 to be its new slave port. Here, although GM 301 remains the main remote master clock, the time codes which BC 304 now syncs its local master clock to are those received via the new slave port 346.

The amount of time BC 304 requires to sync its local master clock to the new main remote master clock is less than the amount of time that a conventional PTP device would require because BC 304 is able to sync its local master clock to the auxiliary clock prior to syncing the local master clock to the new main remote master clock. In one embodiment, BC 304 also applies a phase slope limit (similar to phase slope limit 214) to the local master clock when the local master clock starts syncing to the auxiliary clock. In this way, the phase change in the local master clock can be controlled such that it would not disturb the timing of the downstream PTP devices (in this example, BC 305, SOOC 308, BC 307, and SOOC 310). Thus, by using mechanisms of the present invention, BC 304 is able to handle fault 389 such that it is transparent to all downstream PTP devices by using time codes received via PTP port 346 while it was in the PP state to sync the auxiliary clock to the monitored remote master clock.

Although fault 389 has been described as the cause for BC 304 failing to receive time codes via S port 345, one having ordinary skill in the art would recognize that the present invention is not limited to any particular type of fault. Embodiments of the present invention apply equally to any failure that prevents BC 304 from receiving time codes via S port 345.

Referring now back to Figure 3A for a moment. As described above, S port 324 of BC 302 is communicatively coupled to M port 315 of GM 301. Thus, from the perspective of BC 302, GM 301 is the main remote master clock. BC 302 includes one PTP passive port (i.e., PTP port 325). BC 302 has identified (e.g., by utilizing a PP port identifier similar to PP port identifier 205) PTP passive port 325 as a PP port because PTP passive port 325 is communicatively coupled to a PTP device which has a stepsRemoved value of one less than the stepsRemoved value of BC 302. Here, GM 301 has a stepsRemoved value of 0 and BC 302 has a stepsRemoved value of 1. Thus, from the perspective of BC 302, GM 301 is also the monitored remote master clock. As such, the clock manager (similar to clock manager 210) of BC 302 utilizes time codes received in PTP timing messages (e.g., Sync messages) from GM 301 via PP port 325 to sync an auxiliary clock (similar to auxiliary clock 212) to the monitored remote master clock.

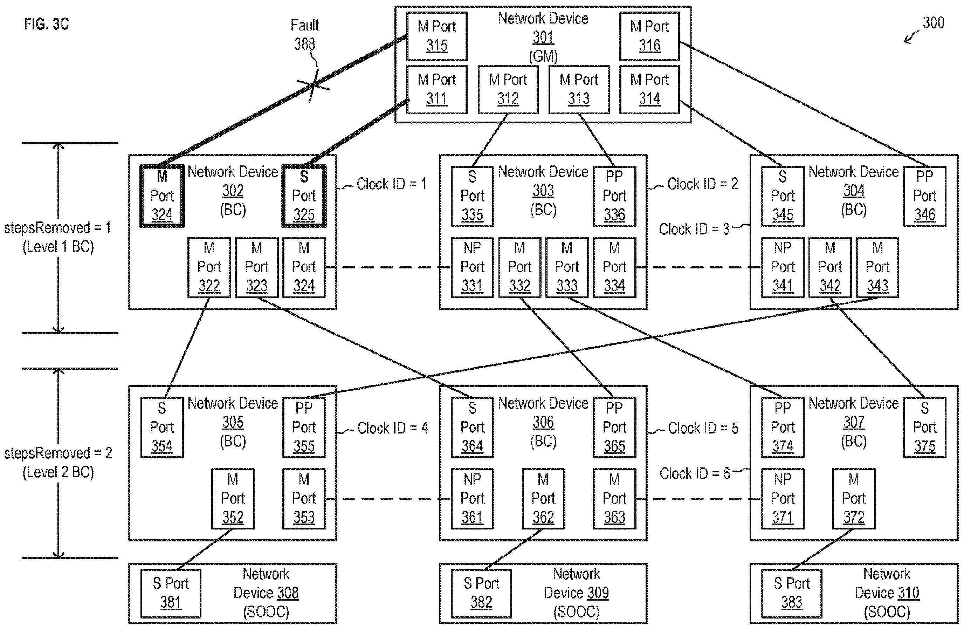

Referring now to Figure 3C, which is a block diagram illustrating network 300 according to one embodiment. Network 300 illustrated in Figure 3C is similar to network 300 shown in Figure 3A, except that fault 388 has occurred. In Figure 3C, the PTP ports and links in bold are those which are affected by fault 388. Due to fault 388, BC 302 is no longer able to receive PTP messages from its main remote master clock (i.e., GM 301) via S port 324. The failure to receive time codes prevents BC 302 from syncing its local master clock (similar to master clock 211) to GM 301 via S port 324. As a result, BC 302 must select a new PTP port to be a slave port.

When a conventional PTP device switches to a new slave port (as illustrated in Figure 1C), there is a possibility that a re-convergence may occur (i.e., a new synchronization tree may be formed), and as a result all downstream PTP devices are affected. For example, in Figure 1C, when BC 102 selects PTP port 123 as the new slave port, BC 102 changes from being one BC level away from GM 101 to three BC levels away from GM 101. This in turn requires all affected downstream PTP devices to select new master and slave ports. Such a re-convergence process requires a long time in order for all clocks in the network to settle to a reliable/accurate state. Embodiments of BC 302 overcome these limitations by selecting PTP port 325 as the PP port because PTP port 325 is communicatively coupled to a remote PTP device (in this example, GM 301) that has a stepsRemoved value of one less than the stepsRemoved value of BC 302. By selecting PTP port 325 as the PP port, BC 302 is able to prevent a re-convergence of the synchronization tree when the PP port is reconfigured to be a slave port. Here, before BC 302 selects the new slave port, BC 302 is one BC level away from GM 301. After BC 302 selects the new slave port (i.e., PTP port 325), BC 302 remains one BC level away from GM 301. The synchronization tree remains unaffected by the selection of the new slave port, preventing all downstream PTP devices from having to select new master and slave ports. Thus, by utilizing mechanisms of the present invention, BC 302 is able to prevent the formation of a new synchronization tree, thereby reducing the amount of time required by downstream PTP devices to sync up to the new master clock.

In one embodiment, in response to determining a failure to receive time codes from the main remote master clock via S port 324 (e.g., due to fault 388), BC 302 reconfigures PTP port 324 from slave state to master state. BC 302 starts syncing its local master clock (similar to master clock 211) to the auxiliary clock (similar to auxiliary clock 212) corresponding to PP port 325. Further, BC 302 reconfigures PTP port 325 from PP state to slave state. Thus, BC 302 has selected PTP port 325 to be its new slave port. Here, although GM 301 remains the main remote master clock, the time codes which BC 302 now syncs its local master clock to are those received via the new slave port 325.

The amount of time BC 302 requires to sync its local master clock to the new main remote master clock is less than the amount of time that a conventional PTP device would require because BC 302 is able to sync its local master clock to the auxiliary clock prior to syncing the local master clock to the new main remote master clock. In one embodiment, BC 302 also applies a phase slope limit (similar to phase slope limit 214) to the local master clock when the local master clock starts syncing to the auxiliary clock. In this way, the phase change in the local master clock can be controlled such that it would not disturb the timing of the downstream PTP devices (in this example, BC 305, SOOC 308, BC 306, and SOOC 309).

As described above, by using mechanisms of the present invention, BC 302 is able to handle fault 388 such that it is transparent to all downstream PTP devices. Here, BC 302 selects a PP port such that it prevents a new synchronization tree from forming when the PP port is reconfigured to be a slave port. By preventing the synchronization tree from changing, sync time is reduced. BC 302 further reduces the sync time by using time codes received via PTP port 325 while it was in the PP state to sync the auxiliary clock to the monitored remote master clock. To avoid disturbing the timing of downstream PTP devices, BC 302 applies a phase slope limit to control the phase change of the master clock.

Although fault 388 has been described as the cause for BC 302 failing to receive time codes via S port 324, one having ordinary skill in the art would recognize that the present invention is not limited to any particular type of fault. Embodiments of the present invention apply equally to any failure that prevents BC 302 from receiving time codes via S port 324.

Referring now back to Figure 3A for a moment. As described above, S port 375 of BC 307 is communicatively coupled to M port 342 of BC 304. Thus, from the perspective of BC 307, BC 304 is the main remote master clock. BC 307 includes two PTP passive ports (i.e., PTP ports 371 and 374). BC 307 has identified (e.g., by utilizing a PP port identifier similar to PP port identifier 205) PTP passive port 374 as a PP port because PTP passive port 374 is communicatively coupled to a PTP device which has a stepsRemoved value of one less than the stepsRemoved value of BC 307. Here, BC 303 has a stepsRemoved value of 1 and BC 307 has a stepsRemoved value of 2. Thus, from the perspective of BC 307, BC 303 is the monitored remote master clock. As such, the clock manager (similar to clock manager 210) of BC 307 utilizes time codes received in PTP timing messages (e.g., Sync messages) from BC 303 via PP port 374 to sync an auxiliary clock (similar to auxiliary clock 212) to the monitored remote master clock.

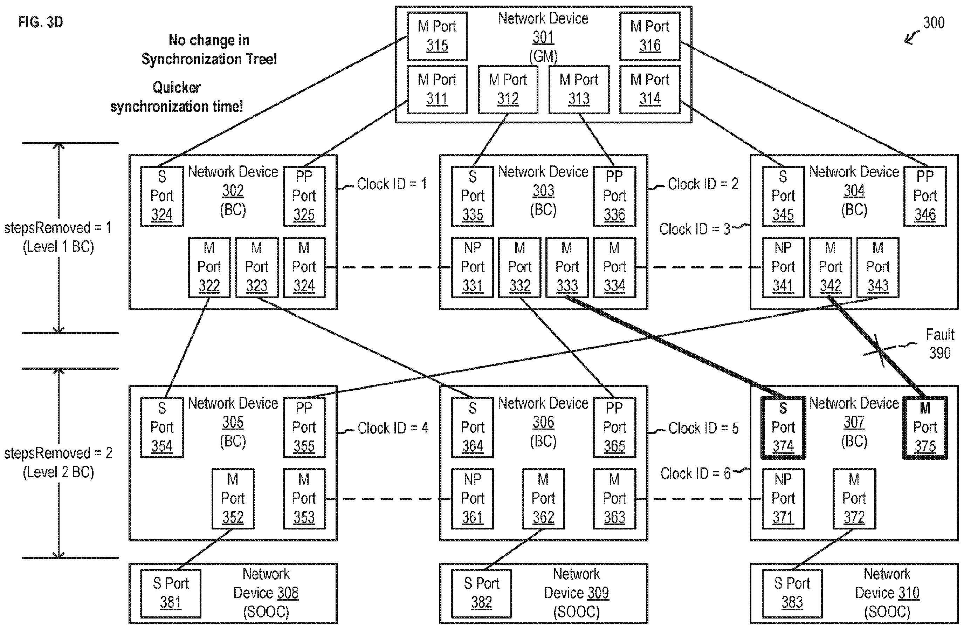

Referring now to Figure 3D, which is a block diagram illustrating network 300 according to one embodiment. Network 300 illustrated in Figure 3D is similar to network 300 shown in Figure 3A, except that fault 390 has occurred. In Figure 3D, the PTP ports and links in bold are those which are affected by fault 390. Due to fault 390, BC 307 is no longer able to receive PTP messages from its main remote master clock (i.e., BC 304) via S port 375. The failure to receive time codes prevents BC 307 from syncing its local master clock (similar to master clock 211) to BC 304 via S port 375. As a result, BC 307 must select a new PTP port to be a slave port.

When a conventional PTP device switches to a new slave port (as illustrated in Figure 1C), there is a possibility that a re-convergence may occur (i.e., a new synchronization tree may be formed), and as a result all downstream PTP devices are affected. For example, in Figure 1C, when BC 102 selects PTP port 123 as the new slave port, BC 102 changes from being one BC level away from GM 101 to three BC levels away from GM 101. This in turn requires all affected downstream PTP devices to select new master and slave ports. Such a re-convergence process requires a long time in order for all clocks in the network to settle to a reliable/accurate state. Embodiments of BC 307 overcome these limitations by selecting PTP port 374 (as opposed to PTP port 371) as the PP port because PTP port 374 is communicatively coupled to a remote PTP device (in this example, BC 303) that has a stepsRemoved value of one less than the stepsRemoved value of BC 307. By selecting PTP port 374 (as opposed to PTP port 371) as the PP port, BC 307 is able to prevent a re-convergence of the synchronization tree when the PP port is reconfigured to be a slave port. Here, before BC 307 selects the new slave port, BC 307 is two BC levels away from GM 301. After BC 307 selects the new slave port (i.e., PTP port 374), BC 307 remains two BC levels away from GM 301. The synchronization tree remains unaffected by the selection of the new slave port, preventing all downstream PTP devices from having to select new master and slave ports. Thus, by utilizing mechanisms of the present invention, BC 307 is able to prevent the formation of a new synchronization tree, thereby reducing the amount of time required by downstream PTP devices to sync up to the new master clock. Note that a conventional PTP device, without the benefits of PP port identifier 205 of the present invention, may select PTP port 371 as the new slave port. This would cause a re-convergence of the synchronization tree because BC 307 would be three BC levels away from GM 301 (i.e., one more BC level away from GM 301 as compared to before the new slave port was selected).

In one embodiment, in response to determining a failure to receive time codes from the main remote master clock via S port 375 (e.g., due to fault 390), BC 307 reconfigures PTP port 375 from slave state to master state. BC 307 starts syncing its local master clock (similar to master clock 211) to the auxiliary clock (similar to auxiliary clock 212) corresponding to PP port 374. Further, BC 307 reconfigures PTP port 374 from PP state to slave state. Thus, BC 307 has selected PTP port 374 to be its new slave port, and the time codes which BC 307 now syncs its local master clock to are those received via new slave port 374.

The amount of time BC 307 requires to sync its local master clock to the new main remote master clock is less than the amount of time that a conventional PTP device would require because BC 307 is able to sync its local master clock to the auxiliary clock prior to syncing the local master clock to the new main remote master clock. In one embodiment, BC 307 also applies a phase slope limit (similar to phase slope limit 214) to the local master clock when the local master clock starts syncing to the auxiliary clock. In this way, the phase change in the local master clock can be controlled such that it would not disturb the timing of the downstream PTP devices (in this example, SOOC 310).

As described above, by using mechanisms of the present invention, BC 307 is able to handle fault 390 such that it is transparent to all downstream PTP devices. Here, BC 307 selects a PP port such that it prevents a new synchronization tree from forming when the PP port is reconfigured to be a slave port. By preventing the synchronization tree from changing, sync time is reduced. BC 307 further reduces the sync time by using time codes received via PTP port 374 while it was in the PP state to sync the auxiliary clock to the monitored remote master clock. To avoid disturbing the timing of downstream PTP devices, BC 307 applies a phase slope limit to control the phase change of the master clock.

Although fault 390 has been described as the cause for BC 307 failing to receive time codes via S port 375, one having ordinary skill in the art would recognize that the present invention is not limited to any particular type of fault. Embodiments of the present invention apply equally to any failure that prevents BC 307 from receiving time codes via S port 375.

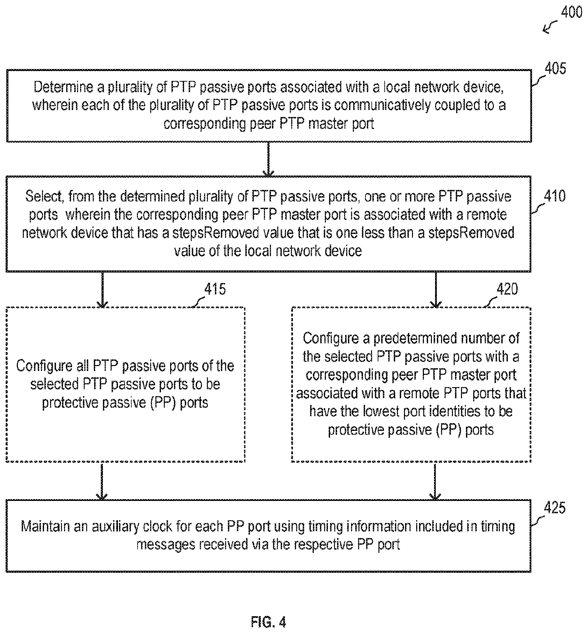

Figure 4 is a flow diagram illustrating method 400 for maintaining an auxiliary clock according to one embodiment. For example, method 400 can be performed by PP port identifier 205 and clock manager 210, which can be implemented in software, firmware, hardware, or any combination thereof. The operations of this and other flow diagrams will be described with reference to the exemplary embodiments of the other diagrams. However, it should be understood that the operations of the flow diagrams can be performed by embodiments of the invention other than those discussed with reference to these other diagrams, and the embodiments of the invention discussed with reference to these other diagrams can perform operations different than those discussed with reference to the flow diagrams.

Referring now to Figure 4, at block 405, the PP port identifier determines a plurality of PTP passive ports associated with a local network device, wherein each of the plurality of PTP passive ports is communicatively coupled to a corresponding peer PTP master port. For example, the PP port identifier of network device 307 determines PTP ports 371 and 374 as PTP passive ports which communicatively couple to corresponding peer PTP master ports 363 and 333, respectively.

At block 410, the PP port identifier selects, from the determined plurality of PTP passive ports, one or more PTP passive ports wherein the corresponding peer PTP master port is associated with a remote network device that has a stepsRemoved value that is one less than a stepsRemoved value of the local network device. For example, the PP port identifier of network device 307 identifies PTP passive port 374 as having a peer PTP master port 333 associated with remote network device 303 which has a stepsRemoved value of one less than the stepsRemoved value of network device 307. Here, network device 303 has a stepsRemoved value of one, and network device 307 has a stepsRemoved value of two.

At block 415, the PP port identifier optionally configures all PTP passive ports of the selected PTP passive ports to be PP ports. For example, the PP port identifier of network device 307 configures PTP passive port 374 to be the PP port. Alternatively, at block 420, the PP port identifier configures a predetermined number of the selected PTP passive ports with a corresponding peer PTP master port that has a lowest port identity to be a PP port. For example, if network device 307 included multiple PTP passive ports that communicatively coupled to PTP devices having a stepsRemoved value that is one less than the stepsRemoved value of network device 307, the PP port identifier of network device 307 can configure a predetermined number of such PTP passive ports to be PP ports. Here, the predetermined number can be a percentage or raw number.

At block 425, the clock manager maintains an auxiliary clock for each PP port using timing information included in timing messages received via the respective PP port. For example, the clock manager of network device 307 utilizes time codes included in PTP timing messages (e.g., PTP Sync messages) received from network device 303 via PP port 374 to maintain an auxiliary clock.

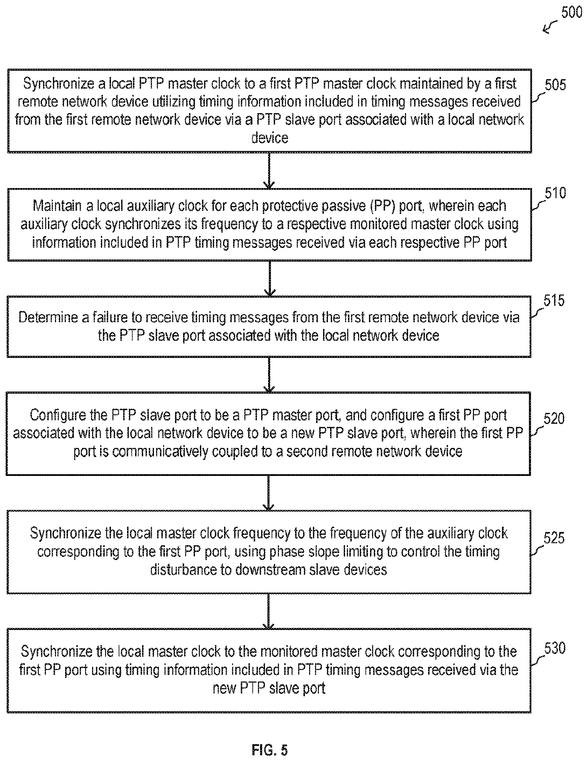

Figure 5 is a flow diagram illustrating method 500 for reducing the time required for a PTP device to sync to a new master clock, according to one embodiment. For example, method 500 can be performed by clock manager 210, which can be implemented in software, firmware, hardware, or any combination thereof.

Referring now to Figure 5, at block 505, the clock manager synchronizes a local PTP master clock to a first PTP master clock maintained by a first remote network device utilizing timing information included in timing messages received from the first remote network device via a PTP slave port associated with a local network device. For example, the clock manager of network device 307 synchronizes its local PTP master clock to the PTP master clock maintained by network device 304 using time codes included in PTP timing messages (e.g., PTP Sync messages) received from network device 304 via PTP slave port 375.

At block 510, the clock manager maintains a local auxiliary clock for each protective passive (PP) port, wherein each auxiliary clock synchronizes its frequency to a respective monitored master clock using information included in PTP timing messages received via each respective PP port. For example, the clock manager of network device 307 maintains an auxiliary clock corresponding to PP port 374, by syncing the auxiliary clock to the PTP master clock maintained by network device 303 using time codes included in PTP timing messages (e.g., PTP Sync messages) received from network device 303 via PP port 374.

At block 515, the clock manager determines a failure to receive timing messages from the first remote network device via the PTP slave port associated with the local network device. For example, the clock manager of network device 307 determines that PTP timing messages can no longer be received from network device 304 via S port 375 (e.g., due to fault 390).

At block 520, the clock manager configures the PTP slave port to be a PTP master port, and configure a first PP port associated with the local network device to be a new PTP slave port, wherein the first PP port is communicatively coupled to a second remote network device. For example, the clock manager of network device 307 configures PTP slave port 375 to be a master port, and configures PP port 374 to be a new slave port.

At block 525, the clock manager synchronizes the local master clock frequency to the frequency of the auxiliary clock corresponding to the first PP port, using phase slope limiting to control the timing disturbance to downstream slave devices. For example, the clock manager of network device 307 syncs the frequency of the local master clock to the frequency of the auxiliary clock corresponding to PP port 374, using a phase slope limit (similar to phase slope limit 214) to control the phase change of the local master clock.

At block 530, the clock manager synchronizes the local master clock to the monitored master clock corresponding to the first PP port using timing information included in PTP timing messages received via the new PTP slave port. For example, the clock manager of network device 307 syncs the local master clock to the master clock maintained by network device 303 using time codes included in PTP timing messages (e.g., PTP Sync messages) received via new slave port 374.

Some portions of the preceding detailed descriptions have been presented in terms of algorithms and symbolic representations of transactions on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of transactions leading to a desired result. The transactions are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present invention are not described with reference to any particular programming language. It will be appreciated that a variety of programming languages may be used to implement the teachings of embodiments of the invention as described herein.

In the foregoing specification, embodiments of the invention have been described with reference to specific exemplary embodiments thereof. It will be evident that various modifications may be made thereto without departing from the broader spirit and scope of the invention as set forth in the following claims. The specification and drawings are, accordingly, to be regarded in an illustrative sense rather than a restrictive sense.

Throughout the description, embodiments of the present invention have been presented through flow diagrams. It will be appreciated that the order of transactions and transactions described in these flow diagrams are only intended for illustrative purposes and not intended as a limitation of the present invention. One having ordinary skill in the art would recognize that variations can be made to the flow diagrams without departing from the broader scope of the invention as set forth in the following claims.

## Claims

1. A method in a first network device (304, 307) for supporting Precision Time Protocol, PTP, in a network, the method comprising:
receiving, by a first PTP port (345, 375) associated with the first network device configured as a PTP slave port, PTP timing messages from a second PTP port (314, 342) associated with a second network device (301, 303) configured as a PTP master port, wherein the PTP timing messages include timing information of a PTP master clock maintained by the second network device;
maintaining a PTP master clock (211) based on the timing information included in the PTP timing messages received from the second network device via the first PTP port;
receiving, by a third PTP port (346, 374) associated with the first network device configured as a PTP passive port, PTP timing messages from a fourth PTP port (316, 333) associated with a third network device (301, 303) configured as a PTP master port, wherein the PTP timing messages include timing information of a PTP master clock maintained by the third network device;
determining the third PTP port (346, 374) is a protective passive port based on a stepsRemoved value associated with the third network device (301, 303), wherein a stepsRemoved value indicates a number of boundary clock levels a respective network device is away from a PTP grandmaster clock of the network; and
in response to determining the third PTP port (346, 374) is a protective passive port, maintaining a PTP auxiliary clock (212) based on the timing information included in the PTP timing messages received from the third network device (301, 303) via the third PTP port (346, 374), wherein in an event that the first network device fails to receive PTP timing messages from the second network device (301, 303) via the first PTP port (345, 375), the PTP auxiliary clock is utilized by the first network device to synchronize its PTP master clock to the PTP master clock maintained by the third network device (301, 303).

2. The method of claim 1, wherein determining the third PTP port (346, 374) is a protective passive port comprises:
determining the third network device (301, 303) has a stepsRemoved value that is one less than a stepsRemoved value of the first network device (304, 307).

3. The method of claim 2, further comprising:
receiving, by a fifth PTP port (341, 371) associated with the first network device (304, 307) configured as a PTP passive port, PTP timing messages from a sixth PTP port (334, 363) associated with a fourth network device (303, 306) configured as a PTP master port, wherein the PTP timing messages include timing information of a PTP master clock maintained by the fourth network device; and
in response to determining the fourth network device (303, 306) has a stepsRemoved value that is equal to a stepsRemoved value of the first network device (304, 307), determining the fifth PTP port (341, 371) is a non-protective passive port.

4. The method of claim 1, wherein determining the third PTP port (374) is a protective passive port comprises:
receiving, by a fifth PTP port (375) associated with the first network device (307) configured as a PTP passive port, PTP timing messages from a sixth PTP port (342) associated with a fourth network device (304) configured as a PTP master port, wherein the PTP timing messages include timing information of a PTP master clock maintained by the fourth network device;
determining the third network device (303) has a stepsRemoved value that is equal to a stepsRemoved value of the fourth network device (304); and
determining the fourth PTP port (333) has a port identity (ID) that is less than a port ID of the sixth PTP port (342) associated with the fourth network device (304).

5. The method of claim 1, further comprising:
in response to determining a failure (389) to receive PTP timing messages from the second network device (301) via the first PTP port (345):
configuring the first PTP port to be a PTP master port,
configuring the third PTP port (346) to be a PTP slave port, and
utilizing information of the PTP auxiliary clock (212) to synchronize the PTP master clock (211) maintained by the first network device (304) to the PTP master clock maintained by the third network device (301).

6. The method of claim 5, further comprising applying a phase slope limit to the PTP master clock maintained by the first network device after the third PTP port has been configured to be a PTP slave port.

7. The method of claim 1, wherein:
the second network device (301) and the third network device (301) are a same network device configured to serve as a PTP grandmaster clock of the network; or
the second network device (303) and the third network device (304) are different network devices, wherein the second network device and the third network device are configured to serve as a PTP boundary clock of the network.

8. A first network device (304, 307) for supporting Precision Time Protocol, PTP, in a network, the first network device comprising:
a first PTP port (345, 375) associated with the first network device configured as a PTP slave port, operative to receive PTP timing messages from a second PTP port (314, 342) associated with a second network device (301, 303) configured as a PTP master port, wherein the PTP timing messages include timing information of a PTP master clock maintained by the second network device;
a third PTP port (346, 374) associated with the first network device configured as a PTP passive port, operative to receive PTP timing messages from a fourth PTP port (316, 333) associated with a third network device (301, 303) configured as a PTP master port, wherein the PTP timing messages include timing information of a PTP master clock maintained by the third network device;
a set of one or more processors; and
a non-transitory machine-readable storage medium containing instructions, which when executed by the set of one or more processors, cause the first network device to:
maintain a PTP master clock (211) based on the timing information included in the PTP timing messages received from the second network device via the first PTP port,
determine the third PTP port (346, 374) is a protective passive port based on a stepsRemoved value associated with the third network device (301, 303), wherein a stepsRemoved value indicates a number of boundary clock levels a respective network device is away from a PTP grandmaster clock of the network, and
in response to determining the third PTP port (346, 374) is a protective passive port, maintain a PTP auxiliary clock (212) based on the timing information included in the PTP timing messages received from the third network device (301, 303) via the third PTP port (346, 374), wherein in an event that the first network device fails to receive PTP timing messages from the second network device (301, 303) via the first PTP port (345, 375), the PTP auxiliary clock is utilized by the first network device to synchronize its PTP master clock to the PTP master clock maintained by the third network device (301, 303).

9. The first network device of claim 8, wherein the instructions that cause the first network device to determine the third PTP port (346, 374) is a protective passive port comprises instructions, which when executed by the set of one or more processors, cause the first network device to determine the third network device (301, 303) has a stepsRemoved value that is one less than a stepsRemoved value of the first network device (304, 307).

10. The first network device of claim 9, further comprising:
a fifth PTP port (341, 371) associated with the first network device (304, 307) configured as a PTP passive port, operative to receive PTP timing messages from a sixth PTP port (334, 363) associated with a fourth network device (303, 306) configured as a PTP master port, wherein the PTP timing messages include timing information of a PTP master clock maintained by the fourth network device, wherein
the non-transitory machine-readable storage medium further contains instructions, which when executed by the set of one or more processors, cause the first network device to in response to determining the fourth network device (303, 306) has a stepsRemoved value that is equal to a stepsRemoved value of the first network device (304, 307), determine the fifth PTP port (341, 371) is a non-protective passive port.

11. The first network device of claim 8, further comprising:
a fifth PTP port (375) associated with the first network device (307) configured as a PTP passive port, operative to receive PTP timing messages from a sixth PTP port (342) associated with a fourth network device (304) configured as a PTP master port, wherein the PTP timing messages include timing information of a PTP master clock maintained by the fourth network device, wherein the instructions that cause the first network device to determine the third PTP port is a protective passive port comprises instructions,
which when executed by the set of one or more processors, cause the first network device to:
determine the third network device (303) has a stepsRemoved value that is equal to a stepsRemoved value of the fourth network device (304), and
determine the fourth PTP port (333) associated with the third network device (303) has a port identity (ID) that is less than a port ID of the sixth PTP port (342) associated with the fourth network device (304).

12. The first network device of claim 8, wherein the non-transitory machine-readable storage medium further containing instructions, which when executed by the set of one or more processors, cause the first network device to in response to determining a failure (389) to receive PTP timing messages from the second network device (301) via the first PTP port (345):
configure the first PTP port to be a PTP master port,
configure the third PTP port (346) to be a PTP slave port, and
utilize information of the PTP auxiliary clock (212) to synchronize the PTP master clock (211) maintained by the first network device (304) to the PTP master clock maintained by the third network device (301).

13. The first network device of claim 12, wherein the non-transitory machine-readable storage medium further contains instructions, which when executed by the set of one or more processors, perform the method of any one of claims 6 to 7.

14. A non-transitory computer-readable storage medium having computer instructions stored therein, which when executed by a processor of a first network device for supporting Precision Time Protocol, PTP, in a network, cause the first network device to perform operations comprising:
receiving, by a first PTP port (345, 375) associated with the first network device configured as a PTP slave port, PTP timing messages from a second PTP port (314, 342) associated with a second network device (301, 303) configured as a PTP master port, wherein the PTP timing messages include timing information of a PTP master clock maintained by the second network device;
maintaining a PTP master clock (211) based on the timing information included in the PTP timing messages received from the second network device via the first PTP port;
receiving, by a third PTP port (346, 374) associated with the first network device configured as a PTP passive port, PTP timing messages from a fourth PTP port (316, 333) associated with a third network device (301, 303) configured as a PTP master port, wherein the PTP timing messages include timing information of a PTP master clock maintained by the third network device;
determining the third PTP port (346, 374) is a protective passive port based on a stepsRemoved value associated with the third network device (301, 303), wherein a stepsRemoved value indicates a number of boundary clock levels a respective network device is away from a PTP grandmaster clock of the network; and
in response to determining the third PTP port (346, 374) is a protective passive port, maintaining a PTP auxiliary clock (212) based on the timing information included in the PTP timing messages received from the third network device (301, 303) via the third PTP port (346, 374), wherein in an event that the first network device fails to receive PTP timing messages from the second network device (301, 303) via the first PTP port (345, 375), the PTP auxiliary clock is utilized by the first network device to synchronize its PTP master clock to the PTP master clock maintained by the third network device (301, 303).

15. The non-transitory computer-readable storage medium of claim 14, wherein the operations comprise a method of any one of claims 2 to 7.

## Patentansprüche

1. Verfahren in einer ersten Netzwerkvorrichtung (304, 307) zum Unterstützen eines Präzisionszeitprotokolls, PTP, in einem Netzwerk, das Verfahren umfassend:
Empfangen, durch einen ersten PTP-Anschluss (345, 375), der mit der ersten Netzwerkvorrichtung verknüpft ist, der als PTP-Slave-Anschluss konfiguriert ist, von PTP-Zeitsteuerungsnachrichten von einem zweiten PTP-Anschluss (314, 342), der mit einer zweiten Netzwerkvorrichtung (301, 303) verknüpft ist, der als PTP-Master-Anschluss konfiguriert ist, wobei die PTP-Zeitsteuerungsnachrichten Zeitsteuerungsinformationen eines PTP-Master-Takts enthalten, der durch die zweite Netzwerkvorrichtung geführt wird;
Führen eines PTP-Master-Takts (211) auf der Basis der Zeitsteuerungsinformationen, die in den PTP-Zeitsteuerungsnachrichten enthalten sind, die von der zweiten Netzwerkvorrichtung über den ersten PTP-Anschluss empfangen werden;
Empfangen, durch einen dritten PTP-Anschluss (346, 374), der mit der ersten Netzwerkvorrichtung verknüpft ist, der als passiver PTP-Anschluss konfiguriert ist, von PTP-Zeitsteuerungsnachrichten von einem vierten PTP-Anschluss (316, 333), der mit einer dritten Netzwerkvorrichtung (301, 303) verknüpft ist, der als PTP-Master-Anschluss konfiguriert ist, wobei die PTP-Zeitsteuerungsnachrichten Zeitsteuerungsinformationen eines PTP-Master-Takts enthalten, der durch die dritte Netzwerkvorrichtung geführt wird;
Ermitteln, dass der dritte PTP-Anschluss (346, 374) ein schützender passiver Anschluss ist, auf der Basis eines stepsRemoved-Werts, der mit der dritten Netzwerkvorrichtung (301, 303) verknüpft ist, wobei ein stepsRemoved-Wert eine Anzahl von Taktgrenzwerten angibt, die eine entsprechende Netzwerkvorrichtung von einem PTP-Grandmaster-Takt des Netzwerks entfernt ist; und
in Antwort auf das Ermitteln, dass der dritte PTP-Anschluss (346, 374) ein schützender passiver Anschluss ist, Führen eines PTP-Hilfstakts (212) auf der Basis der Zeitsteuerungsinformationen, die in den PTP-Zeitsteuerungsnachrichten enthalten sind, die von der dritten Netzwerkvorrichtung (301, 303) über den dritten PTP-Anschluss (346, 374) empfangen werden, wobei, falls die erste Netzwerkvorrichtung versagt, PTP-Zeitsteuerungsnachrichten von der zweiten Netzwerkvorrichtung (301, 303) über den ersten PTP-Anschluss (345, 375) zu empfangen, der PTP-Hilfstakt durch die erste Netzwerkvorrichtung zum Synchronisieren ihres PTP-Master-Takts auf den PTP-Master-Takt verwendet wird, der durch die dritte Netzwerkvorrichtung (301, 303) geführt wird.

2. Verfahren nach Anspruch 1, wobei das Ermitteln, dass der dritte PTP-Anschlusses (346, 374) ein schützender passiver Anschluss ist, umfasst:
Ermitteln, dass die dritte Netzwerkvorrichtung (301, 303) einen stepsRemoved-Wert hat, der kleiner als ein stepsRemoved-Wert der ersten Netzwerkvorrichtung (304, 307) ist.

3. Verfahren nach Anspruch 2, ferner umfassend:
Empfangen, durch einen fünften PTP-Anschluss (341, 371), der mit der ersten Netzwerkvorrichtung (304, 307) verknüpft ist, der als passiver PTP-Anschluss konfiguriert ist, von PTP-Zeitsteuerungsnachrichten von einem sechsten PTP-Anschluss (334, 363), der mit einer vierten Netzwerkvorrichtung (303, 306) verknüpft ist, der als PTP-Master-Anschluss konfiguriert ist, wobei die PTP-Zeitsteuerungsnachrichten Zeitsteuerungsinformationen eines PTP-Mastertakts enthalten, der durch die vierte Netzwerkvorrichtung geführt wird; und
in Antwort auf das Ermitteln, dass die vierte Netzwerkvorrichtung (303 306) einen stepsRemoved-Wert hat, der gleich einem stepsRemoved-Wert der ersten Netzwerkvorrichtung (304, 307) ist, Ermitteln, dass der fünfte PTP-Anschluss (341, 371) ein nicht schützender passiver Anschluss ist.

4. Verfahren nach Anspruch 1, wobei das Ermitteln, dass der dritte PTP-Anschluss (374) ein schützender passiver Anschluss ist, umfasst:
Empfangen, durch einen fünften PTP-Anschluss (375), der mit der ersten Netzwerkvorrichtung (307) verknüpft ist, der als passiver PTP-Anschluss konfiguriert ist, von PTP-Zeitsteuerungsnachrichten von einem sechsten PTP-Anschluss (342), der mit einer vierten Netzwerkvorrichtung (304) verknüpft ist, der als PTP-Master-Anschluss konfiguriert ist, wobei die PTP-Zeitsteuerungsnachrichten Zeitsteuerungsinformationen eines PTP-Mastertakts enthalten, der durch die vierte Netzwerkvorrichtung geführt wird;
Ermitteln, dass die dritte Netzwerkvorrichtung (303) einen stepsRemoved-Wert hat, der gleich einem stepsRemoved-Wert der vierten Netzwerkvorrichtung (304) ist; und
Ermitteln, dass der vierte PTP-Anschluss (333) eine Anschlussidentität (ID) hat, die kleiner als eine Anschluss-ID des sechsten PTP-Anschlusses (342) ist, der mit der vierten Netzwerkvorrichtung (304) verknüpft ist.

5. Verfahren nach Anspruch 1, ferner umfassend:
in Antwort auf ein Ermitteln eines Versagens (389), PTP-Zeitsteuerungsnachrichten von der zweiten Netzwerkvorrichtung (301) über den ersten PTP-Anschluss (345) zu empfangen:
Konfigurieren des ersten PTP-Anschlusses als einen PTP-Master-Anschluss,
Konfigurieren des dritten PTP-Anschlusses (346) als einen PTP-Slave-Anschluss und
Verwenden von Informationen des PTP-Hilfstakts (212) zum Synchronisieren des PTP-Mastertakts (211), der durch die erste Netzwerkvorrichtung (304) geführt wird, auf den PTP-Mastertakt, der durch die dritte Netzwerkvorrichtung (301) geführt wird.

6. Verfahren nach Anspruch 5, ferner umfassend ein Anlegen eines Phasenneigungslimits an den PTP-Mastertakt, der durch die erste Netzwerkvorrichtung geführt wird, nachdem der dritte PTP-Anschluss als PTP-Slave-Anschluss konfiguriert wurde.

7. Verfahren nach Anspruch 1, wobei:
die zweite Netzwerkvorrichtung (301) und die dritte Netzwerkvorrichtung (301) dieselbe Netzwerkvorrichtung sind, die konfiguriert ist als PTP-Grandmaster-Takt des Netzwerks zu dienen; oder
die zweite Netzwerkvorrichtung (303) und die dritte Netzwerkvorrichtung (304) unterschiedliche Netzwerkvorrichtungen sind, wobei die zweite Netzwerkvorrichtung und die dritte Netzwerkvorrichtung konfiguriert sind, als PTP-Grenztakt des Netzwerks zu dienen.

8. Erste Netzwerkvorrichtung (304, 307) zum Unterstützen eines Präzisionszeitprotokolls, PTP, in einem Netzwerk, die erste Netzwerkvorrichtung umfassend:
einen ersten PTP-Anschluss (345, 375), der mit der ersten Netzwerkvorrichtung verknüpft ist, der als PTP-Slave-Anschluss konfiguriert ist, der betriebsbereit ist, PTP-Zeitsteuerungsnachrichten von einem zweiten PTP-Anschluss (314, 342) zu empfangen, der mit einer zweiten Netzwerkvorrichtung (301, 303) verknüpft ist, der als PTP-Master-Anschluss konfiguriert ist, wobei die PTP-Zeitsteuerungsnachrichten Zeitsteuerungsinformationen eines PTP-Master-Takts enthalten, der durch die zweite Netzwerkvorrichtung geführt wird;
einen dritten PTP-Anschluss (346, 374), der mit der ersten Netzwerkvorrichtung verknüpft ist, der als passiver PTP-Anschluss konfiguriert ist, der betriebsbereit ist, PTP-Zeitsteuerungsnachrichten von einem vierten PTP-Anschluss (316, 333) zu empfangen, der mit einer dritten Netzwerkvorrichtung (301, 303) verknüpft ist, der als PTP-Master-Anschluss konfiguriert ist, wobei die PTP-Zeitsteuerungsnachrichten Zeitsteuerungsinformationen eines PTP-Master-Takts enthalten, der durch die dritte Netzwerkvorrichtung geführt wird;
einen Satz aus einem oder mehreren Prozessor(en); und
ein nicht transitorisches, maschinenlesbares Speichermedium, das Anweisungen enthält, die, wenn sie durch den Satz aus einem oder mehreren Prozessor (en) ausgeführt werden, die erste Netzwerkvorrichtung veranlassen zum:
Führen eines PTP-Master-Takts (211) auf der Basis der Zeitsteuerungsinformationen, die in den PTP-Zeitsteuerungsnachrichten enthalten sind, die von der zweiten Netzwerkvorrichtung über den ersten PTP-Anschluss empfangen werden;
Ermitteln, dass der dritte PTP-Anschluss (346, 374) ein schützender passiver Anschluss ist, auf der Basis eines stepsRemoved-Werts, der mit der dritten Netzwerkvorrichtung (301, 303) verknüpft ist, wobei ein stepsRemoved-Wert eine Anzahl von Taktgrenzwerten angibt, die eine entsprechende Netzwerkvorrichtung von einem PTP-Grandmaster-Takt des Netzwerks entfernt ist; und
in Antwort auf das Ermitteln, dass der dritte PTP-Anschluss (346, 374) ein schützender passiver Anschluss ist, Führen eines PTP-Hilfstakts (212) auf der Basis der Zeitsteuerungsinformationen, die in den PTP-Zeitsteuerungsnachrichten enthalten sind, die von der dritten Netzwerkvorrichtung (301, 303) über den dritten PTP-Anschluss (346, 374) empfangen werden, wobei, falls die erste Netzwerkvorrichtung versagt, PTP-Zeitsteuerungsnachrichten von der zweiten Netzwerkvorrichtung (301, 303) über den ersten PTP-Anschluss (345, 375) zu empfangen, der PTP-Hilfstakt durch die erste Netzwerkvorrichtung zum Synchronisieren ihres PTP-Master-Takts auf den PTP-Master-Takt verwendet wird, der durch die dritte Netzwerkvorrichtung (301, 303) geführt wird.

9. Erste Netzwerkvorrichtung nach Anspruch 8, wobei die Anweisungen, die die erste Netzwerkvorrichtung veranlassen, den dritten PTP-Anschluss (346, 374) als schützenden passiven Anschluss zu ermitteln, Anweisungen umfassen, die, wenn sie durch den Satz aus einem oder mehreren Prozessor(en) ausgeführt werden, die erste Netzwerkvorrichtung veranlassen zu ermitteln, dass die dritte Netzwerkvorrichtung (301, 303) einen stepsRemoved-Wert hat, der kleiner als ein stepsRemoved-Wert der ersten Netzwerkvorrichtung (304, 307) ist.

10. Erste Netzwerkvorrichtung nach Anspruch 9, ferner umfassend:
einen fünften PTP-Anschluss (341, 371), der mit der ersten Netzwerkvorrichtung (304, 307) verknüpft ist, der als passiver PTP-Anschluss konfiguriert ist, der betriebsbereit ist, PTP-Zeitsteuerungsnachrichten von einem sechsten PTP-Anschluss (334, 363) zu empfangen, der mit einer vierten Netzwerkvorrichtung (303, 306) verknüpft ist, der als PTP-Master-Anschluss konfiguriert ist, wobei die PTP-Zeitsteuerungsnachrichten Zeitsteuerungsinformationen eines PTP-Mastertakts enthalten, der durch die vierte Netzwerkvorrichtung geführt wird; wobei
das nicht transitorische, maschinenlesbare Speichermedium ferner Anweisungen enthält, die wenn sie durch den Satz aus einem oder mehreren Prozessor (en) ausgeführt werden, die erste Netzwerkvorrichtung veranlassen, in Antwort auf ein Ermitteln, dass die vierte Netzwerkvorrichtung (303, 306) einen stepsRemoved-Wert hat, der gleich einem stepsRemoved-Wert der ersten Netzwerkvorrichtung (304, 307) ist, zu ermitteln, dass der fünfte PTP-Anschluss (341, 371) ein nicht schützender passiver Anschluss ist.

11. Erste Netzwerkvorrichtung nach Anspruch 8, ferner umfassend:
einen fünften PTP-Anschluss (375), der mit der ersten Netzwerkvorrichtung (307) verknüpft ist, der als passiver PTP-Anschluss konfiguriert ist, der betriebsbereit ist, PTP-Zeitsteuerungsnachrichten von einem sechsten PTP-Anschluss (342) zu empfangen, der mit einer vierten Netzwerkvorrichtung (304) verknüpft ist, der als PTP-Master-Anschluss konfiguriert ist, wobei die PTP-Zeitsteuerungsnachrichten Zeitsteuerungsinformationen eines PTP-Mastertakts enthalten, der durch die vierte Netzwerkvorrichtung geführt wird, wobei die Anweisungen, die die erste Netzwerkvorrichtung veranlassen zu ermitteln, dass der dritte PTP-Anschluss ein schützender passiver Anschluss ist, Anweisungen umfassen, die, wenn sie durch den Satz aus einem oder mehreren Prozessor(en) ausgeführt werden, die erste Netzwerkvorrichtung veranlassen zum:
Ermitteln, dass die dritte Netzwerkvorrichtung (303) einen stepsRemoved-Wert hat, der gleich einem stepsRemoved-Wert der vierten Netzwerkvorrichtung (304) ist; und
Ermitteln, dass der vierte PTP-Anschluss (333), der mit der dritten Netzwerkvorrichtung (303) verknüpft ist, eine Anschlussidentität (ID) hat, die kleiner als eine Anschluss-ID des sechsten PTP-Anschlusses (342) ist, der mit der vierten Netzwerkvorrichtung (304) verknüpft ist.

12. Erste Netzwerkvorrichtung nach Anspruch 8, wobei das nicht transitorische, maschinenlesbare Speichermedium ferner Anweisungen enthält, die, wenn sie durch den Satz aus einem oder mehreren Prozessor(en) ausgeführt werden, die erste Netzwerkvorrichtung in Antwort auf ein Ermitteln eines Versagens (389), PTP-Zeitsteuerungsnachrichten von der zweiten Netzwerkvorrichtung (301) über den ersten PTP-Anschluss (345) zu empfangen, veranlassen zum:
Konfigurieren des ersten PTP-Anschlusses als einen PTP-Master-Anschluss,
Konfigurieren des dritten PTP-Anschlusses (346) als einen PTP-Slave-Anschluss und
Verwenden von Informationen des PTP-Hilfstakts (212) zum Synchronisieren des PTP-Mastertakts (211), der durch die erste Netzwerkvorrichtung (304) geführt wird, auf den PTP-Mastertakt, der durch die dritte Netzwerkvorrichtung (301) geführt wird.

13. Erste Netzwerkvorrichtung nach Anspruch 12, wobei das nicht transitorische, maschinenlesbare Speichermedium ferner Anweisungen enthält, die, wenn sie durch den Satz aus einem oder mehreren Prozessor(en) ausgeführt werden, das Verfahren nach einem der Ansprüche 6 bis 7 durchführen.

14. Nicht transitorisches, maschinenlesbares Speichermedium, auf dem Computeranweisungen gespeichert sind, die, wenn sie durch einen Prozessor einer ersten Netzwerkvorrichtung zum Unterstützen eines Präzisionszeitprotokolls, PTP, in einem Netzwerk, ausgeführt werden, die erste Netzwerkvorrichtung veranlassen, Operationen auszuführen, umfassend:
Empfangen, durch einen ersten PTP-Anschluss (345, 375), der mit der ersten Netzwerkvorrichtung verknüpft ist, der als PTP-Slave-Anschluss konfiguriert ist, von PTP-Zeitsteuerungsnachrichten von einem zweiten PTP-Anschluss (314, 342), der mit einer zweiten Netzwerkvorrichtung (301, 303) verknüpft ist, der als PTP-Master-Anschluss konfiguriert ist, wobei die PTP-Zeitsteuerungsnachrichten Zeitsteuerungsinformationen eines PTP-Master-Takts enthalten, der durch die zweite Netzwerkvorrichtung geführt wird;
Führen eines PTP-Master-Takts (211) auf der Basis der Zeitsteuerungsinformationen, die in den PTP-Zeitsteuerungsnachrichten enthalten sind, die von der zweiten Netzwerkvorrichtung über den ersten PTP-Anschluss empfangen werden;
Empfangen, durch einen dritten PTP-Anschluss (346, 374), der mit der ersten Netzwerkvorrichtung verknüpft ist, der als passiver PTP-Anschluss konfiguriert ist, von PTP-Zeitsteuerungsnachrichten von einem vierten PTP-Anschluss (316, 333), der mit einer dritten Netzwerkvorrichtung (301, 303) verknüpft ist, der als PTP-Master-Anschluss konfiguriert ist, wobei die PTP-Zeitsteuerungsnachrichten Zeitsteuerungsinformationen eines PTP-Master-Takts enthalten, der durch die dritte Netzwerkvorrichtung geführt wird;
Ermitteln, dass der dritte PTP-Anschluss (346, 374) ein schützender passiver Anschluss ist, auf der Basis eines stepsRemoved-Werts, der mit der dritten Netzwerkvorrichtung (301, 303) verknüpft ist, wobei ein stepsRemoved-Wert eine Anzahl von Taktgrenzwerten angibt, die eine entsprechende Netzwerkvorrichtung von einem PTP-Grandmaster-Takt des Netzwerks entfernt ist; und
in Antwort auf das Ermitteln, dass der dritte PTP-Anschluss (346, 374) ein schützender passiver Anschluss ist, Führen eines PTP-Hilfstakts (212) auf der Basis der Zeitsteuerungsinformationen, die in den PTP-Zeitsteuerungsnachrichten enthalten sind, die von der dritten Netzwerkvorrichtung (301, 303) über den dritten PTP-Anschluss (346, 374) empfangen werden, wobei, falls die erste Netzwerkvorrichtung versagt, PTP-Zeitsteuerungsnachrichten von der zweiten Netzwerkvorrichtung (301, 303) über den ersten PTP-Anschluss (345, 375) zu empfangen, der PTP-Hilfstakt durch die erste Netzwerkvorrichtung zum Synchronisieren ihres PTP-Master-Takts auf den PTP-Master-Takt verwendet wird, der durch die dritte Netzwerkvorrichtung (301, 303) geführt wird.

15. Nicht transitorisches, maschinenlesbares Speichermedium nach Anspruch 14, wobei die Operationen ein Verfahren nach einem der Ansprüche 2 bis 7 umfassen.

## Revendications

1. Procédé dans un premier dispositif de réseau (304, 307) pour prendre en charge un protocole de temps de précision, PTP, dans un réseau, le procédé comprenant :
la réception, par un premier port PTP (345, 375) associé au premier dispositif de réseau configuré en tant que port esclave PTP, de messages de timing PTP en provenance d'un deuxième port PTP (314, 342) associé à un deuxième dispositif de réseau (301, 303) configuré en tant que port maître PTP, dans lequel les messages de timing PTP comprennent des informations de timing d'une horloge maître PTP maintenue par le deuxième dispositif de réseau ;
le maintien d'une horloge maître PTP (211) sur la base des informations de timing incluses dans les messages de timing PTP reçus en provenance du deuxième dispositif de réseau par l'intermédiaire du premier port PTP ;
la réception, par un troisième port PTP (346, 374) associé au premier dispositif de réseau configuré en tant que port passif PTP, de messages de timing PTP en provenance d'un quatrième port PTP (316, 333) associé à un troisième dispositif de réseau (301, 303) configuré en tant que port maître PTP, dans lequel les messages de timing PTP comprennent des informations de timing d'une horloge maître PTP maintenue par le troisième dispositif de réseau ;
la détermination que le troisième port PTP (346, 374) est un port passif protecteur sur la base d'une valeur associée au troisième dispositif de réseau (301, 303), dans lequel une valeur indique un nombre de niveaux d'horloge de frontière entre un dispositif de réseau respectif et une horloge grand maître PTP du réseau ; et
en réponse à la détermination que le troisième port PTP (346, 374) est un port passif protecteur, le maintien d'une horloge auxiliaire PTP (212) sur la base des informations de timing incluses dans les messages de timing PTP reçus en provenance du troisième dispositif de réseau (301, 303) par l'intermédiaire du troisième port PTP (346, 374), dans lequel, dans un cas dans lequel le premier dispositif de réseau ne parvient pas à recevoir des messages de timing PTP en provenance du deuxième dispositif de réseau (301, 303) par l'intermédiaire du premier port PTP (345, 375), l'horloge auxiliaire PTP est utilisée par le premier dispositif de réseau pour synchroniser son horloge maître PTP avec l'horloge maître PTP maintenue par le troisième dispositif de réseau (301, 303).

2. Procédé selon la revendication 1, dans lequel la détermination que le troisième port PTP (346, 374) est un port passif protecteur comprend :
la détermination que le troisième dispositif de réseau (301, 303) a une valeur qui est un de moins qu'une valeur du premier dispositif de réseau (304, 307).

3. Procédé selon la revendication 2, comprenant en outre :
la réception, par un cinquième port PTP (341, 371) associé au premier dispositif de réseau (304, 307) configuré en tant que port passif PTP, de messages de timing PTP en provenance d'un sixième port PTP (334, 363) associé à un quatrième dispositif de réseau (303, 306) configuré en tant que port maître PTP, dans lequel les messages de timing PTP comprennent des informations de timing d'une horloge maître PTP maintenue par le quatrième dispositif de réseau ; et
en réponse à la détermination que le quatrième dispositif de réseau (303, 306) a une valeur qui est égale à une valeur du premier dispositif de réseau (304, 307), la détermination que le cinquième port PTP (341, 371) est un port passif non protecteur.

4. Procédé selon la revendication 1, dans lequel la détermination que le troisième port PTP (374) est un port passif protecteur comprend :
la réception, par un cinquième port PTP (375) associé au premier dispositif de réseau (307) configuré en tant que port passif PTP, de messages de timing PTP en provenance d'un sixième port PTP (342) associé à un quatrième dispositif de réseau (304) configuré en tant que port maître PTP, dans lequel les messages de timing PTP comprennent des informations de timing d'une horloge maître PTP maintenue par le quatrième dispositif de réseau ;
la détermination que le troisième dispositif de réseau (303) a une valeur qui est égale à une valeur du quatrième dispositif de réseau (304) ; et
la détermination que le quatrième port PTP (333) a une identité (ID) de port qui est inférieure à une ID de port du sixième port PTP (342) associé au quatrième dispositif de réseau (304).

5. Procédé selon la revendication 1, comprenant en outre :
en réponse à la détermination d'un échec (389) de réception de messages de timing PTP en provenance du deuxième dispositif de réseau (301) par l'intermédiaire du premier port PTP (345) :
la configuration du premier port PTP pour qu'il soit un port maître PTP,
la configuration du troisième port PTP (346) pour qu'il soit un port esclave PTP, et
l'utilisation d'informations de l'horloge auxiliaire PTP (212) pour synchroniser l'horloge maître PTP (211) maintenue par le premier dispositif de réseau (304) avec l'horloge maître PTP maintenue par le troisième dispositif de réseau (301).

6. Procédé selon la revendication 5, comprenant en outre l'application d'une limite de pente de phase à l'horloge maître PTP maintenue par le premier dispositif de réseau après que le troisième port PTP a été configuré pour être un port esclave PTP.

7. Procédé selon la revendication 1, dans lequel :
le deuxième dispositif de réseau (301) et le troisième dispositif de réseau (301) sont un même dispositif de réseau configuré pour servir d'horloge grand maître PTP du réseau ; ou
le deuxième dispositif de réseau (303) et le troisième dispositif de réseau (304) sont des dispositifs de réseau différents, dans lequel le deuxième dispositif de réseau et le troisième dispositif de réseau sont configurés pour servir d'horloge de frontière PTP du réseau.

8. Premier dispositif de réseau (304, 307) pour prendre en charge un protocole de temps de précision, PTP, dans un réseau, le premier dispositif de réseau comprenant :
un premier port PTP (345, 375) associé au premier dispositif de réseau configuré en tant que port esclave PTP, opérationnel pour recevoir des messages de timing PTP en provenance d'un deuxième port PTP (314, 342) associé à un deuxième dispositif de réseau (301, 303) configuré en tant que port maître PTP, dans lequel les messages de timing PTP comprennent des informations de timing d'une horloge maître PTP maintenue par le deuxième dispositif de réseau ;
un troisième port PTP (346, 374) associé au premier dispositif de réseau configuré en tant que port passif PTP, opérationnel pour recevoir des messages de timing PTP en provenance d'un quatrième port PTP (316, 333) associé à un troisième dispositif de réseau (301, 303) configuré en tant que port maître PTP, dans lequel les messages de timing PTP comprennent des informations de timing d'une horloge maître PTP maintenue par le troisième dispositif de réseau ;
un ensemble d'un ou plusieurs processeurs ; et
un support de mémorisation lisible par machine non transitoire contenant des instructions qui, lorsqu'elles sont exécutées par l'ensemble d'un ou plusieurs processeurs, amènent le premier dispositif de réseau à effectuer :
le maintien d'une horloge maître PTP (211) sur la base des informations de timing incluses dans les messages de timing PTP reçus en provenance du deuxième dispositif de réseau par l'intermédiaire du premier port PTP ;
la détermination que le troisième port PTP (346, 374) est un port passif protecteur sur la base d'une valeur associée au troisième dispositif de réseau (301, 303), dans lequel une valeur indique un nombre de niveaux d'horloge de frontière entre un dispositif de réseau respectif et une horloge grand maître PTP du réseau ; et
en réponse à la détermination que le troisième port PTP (346, 374) est un port passif protecteur, le maintien d'une horloge auxiliaire PTP (212) sur la base des informations de timing incluses dans les messages de timing PTP reçus en provenance du troisième dispositif de réseau (301, 303) par l'intermédiaire du troisième port PTP (346, 374), dans lequel, dans un cas dans lequel le premier dispositif de réseau ne parvient pas à recevoir des messages de timing PTP en provenance du deuxième dispositif de réseau (301, 303) par l'intermédiaire du premier port PTP (345, 375), l'horloge auxiliaire PTP est utilisée par le premier dispositif de réseau pour synchroniser son horloge maître PTP avec l'horloge maître PTP maintenue par le troisième dispositif de réseau (301, 303).

9. Premier dispositif de réseau selon la revendication 8, dans lequel les instructions qui amènent le premier dispositif de réseau à effectuer la détermination que le troisième port PTP (346, 374) est un port passif protecteur comprennent des instructions qui, lorsqu'elles sont exécutées par l'ensemble d'un ou plusieurs processeurs, amènent le premier dispositif de réseau à effectuer la détermination que le troisième dispositif de réseau (301, 303) a une valeur qui est un de moins qu'une valeur du premier dispositif de réseau (304, 307).

10. Premier dispositif de réseau selon la revendication 9, comprenant en outre :
un cinquième port PTP (341, 371) associé au premier dispositif de réseau (304, 307) configuré en tant que port passif PTP, opérationnel pour recevoir des messages de timing PTP en provenance d'un sixième port PTP (334, 363) associé à un quatrième dispositif de réseau (303, 306) configuré en tant que port maître PTP, dans lequel les messages de timing PTP comprennent des informations de timing d'une horloge maître PTP maintenue par le quatrième dispositif de réseau, dans lequel
le support de mémorisation lisible par machine non transitoire contient en outre des instructions qui, lorsqu'elles sont exécutées par l'ensemble d'un ou plusieurs processeurs, amènent le premier dispositif de réseau à effectuer, en réponse à la détermination que le quatrième dispositif de réseau (303, 306) a une valeur qui est égale à une valeur du premier dispositif de réseau (304, 307), la détermination que le cinquième port PTP (341, 371) est un port passif non protecteur.

11. Premier dispositif de réseau selon la revendication 8, comprenant en outre :
un cinquième port PTP (375) associé au premier dispositif de réseau (307) configuré en tant que port passif PTP, opérationnel pour recevoir des messages de timing PTP en provenance d'un sixième port PTP (342) associé à un quatrième dispositif de réseau (304) configuré en tant que port maître PTP, dans lequel les messages de timing PTP comprennent des informations de timing d'une horloge maître PTP maintenue par le quatrième dispositif de réseau,
dans lequel les instructions qui amènent le premier dispositif de réseau à déterminer que le troisième port PTP est un port passif protecteur comprennent des instructions qui, lorsqu'elles sont exécutées par l'ensemble d'un ou plusieurs processeurs, amènent le premier dispositif de réseau à effectuer :
la détermination que le troisième dispositif de réseau (303) a une valeur qui est égale à une valeur du quatrième dispositif de réseau (304) ; et
la détermination que le quatrième port PTP (333) associé au troisième dispositif de réseau (303) a une identité (ID) de port qui est inférieure à une ID de port du sixième port PTP (342) associé au quatrième dispositif de réseau (304).

12. Premier dispositif de réseau selon la revendication 8, dans lequel le support de mémorisation lisible par machine non transitoire contient en outre des instructions qui, lorsqu'elles sont exécutées par l'ensemble d'un ou plusieurs processeurs, amènent le premier dispositif de réseau à effectuer, en réponse à la détermination d'un échec (389) de réception de messages de timing PTP en provenance du deuxième dispositif de réseau (301) par l'intermédiaire du premier port PTP (345) :
la configuration du premier port PTP pour qu'il soit un port maître PTP,
la configuration du troisième port PTP (346) pour qu'il soit un port esclave PTP, et
l'utilisation d'informations de l'horloge auxiliaire PTP (212) pour synchroniser l'horloge maître PTP (211) maintenue par le premier dispositif de réseau (304) avec l'horloge maître PTP maintenue par le troisième dispositif de réseau (301).

13. Premier dispositif de réseau selon la revendication 12, dans lequel le support de mémorisation lisible par machine non transitoire contient en outre des instructions qui, lorsqu'elles sont exécutées par l'ensemble d'un ou plusieurs processeurs, effectuent le procédé selon l'une quelconque des revendications 6 à 7.

14. Support de mémorisation lisible par machine non transitoire contenant des instructions informatiques mémorisées sur celui-ci qui, lorsqu'elles sont exécutées par un processeur d'un premier dispositif de réseau destiné à prendre en charge un protocole de temps de précision, PTP, dans un réseau, amènent le premier dispositif de réseau à effectuer des opérations comprenant :
la réception, par un premier port PTP (345, 375) associé au premier dispositif de réseau configuré en tant que port esclave PTP, de messages de timing PTP en provenance d'un deuxième port PTP (314, 342) associé à un deuxième dispositif de réseau (301, 303) configuré en tant que port maître PTP, dans lequel les messages de timing PTP comprennent des informations de timing d'une horloge maître PTP maintenue par le deuxième dispositif de réseau ;
le maintien d'une horloge maître PTP (211) sur la base des informations de timing incluses dans les messages de timing PTP reçus en provenance du deuxième dispositif de réseau par l'intermédiaire du premier port PTP ;
la réception, par un troisième port PTP (346, 374) associé au premier dispositif de réseau configuré en tant que port passif PTP, de messages de timing PTP en provenance d'un quatrième port PTP (316, 333) associé à un troisième dispositif de réseau (301, 303) configuré en tant que port maître PTP, dans lequel les messages de timing PTP comprennent des informations de timing d'une horloge maître PTP maintenue par le troisième dispositif de réseau ;
la détermination que le troisième port PTP (346, 374) est un port passif protecteur sur la base d'une valeur associée au troisième dispositif de réseau (301, 303), dans lequel une valeur indique un nombre de niveaux d'horloge de frontière entre un dispositif de réseau respectif et une horloge grand maître PTP du réseau ; et
en réponse à la détermination que le troisième port PTP (346, 374) est un port passif protecteur, le maintien d'une horloge auxiliaire PTP (212) sur la base des informations de timing incluses dans les messages de timing PTP reçus en provenance du troisième dispositif de réseau (301, 303) par l'intermédiaire du troisième port PTP (346, 374), dans lequel, dans un cas dans lequel le premier dispositif de réseau ne parvient pas à recevoir des messages de timing PTP en provenance du deuxième dispositif de réseau (301, 303) par l'intermédiaire du premier port PTP (345, 375), l'horloge auxiliaire PTP est utilisée par le premier dispositif de réseau pour synchroniser son horloge maître PTP avec l'horloge maître PTP maintenue par le troisième dispositif de réseau (301, 303).

15. Support de mémorisation lisible par machine non transitoire selon la revendication 14, dans lequel les opérations comprennent un procédé selon l'une quelconque des revendications 2 à 7.
